# EUROPEAN PATENT SPECIFICATION

(11) **EP 4 181 620 B1**
(45) Date of publication and mention of the grant of the patent: **27.08.2025**
(21) Application number: 20944457.9
(22) Date of filing: 10.07.2020
(51) Int. Cl.: H04W 76/15, H04W 76/27, H04W 92/20

(54) **ACTIVATION AND DEACTIVATION OF AN SCG**
AKTIVIERUNG UND DESAKTIVIERUNG EINES SCG
ACTIVATION ET DÉSACTIVATION D'UN GSC

(43) Date of publication of application: 17.05.2023
(60) Divisional application: 25183170.7
(73) Proprietor: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN)
(74) Representative: Novagraaf Technologies
(86) International application number: PCT/CN2020/101354
(87) International publication number: WO 2022/006858

(56) References cited:
- WO-A1-2020/063444
- WO-A1-2020/113999
- CN-A- 104 811 929
- CN-A- 110 536 347
- CN-A- 111 183 706
- CN-A- 111 225 396
- CN-A- 111 345 110
- US-A1- 2015 215 929
- US-A1- 2018 270 713
- APPLE: "UE Assistance Information for EN-DC", vol. RAN WG2, no. Chongqing, China; 20191014 - 20191018, 4 October 2019 (2019-10-04), XP051804485, Retrieved from the Internet <URL:https://ftp.3gpp.org/tsg_ran/WG2_RL2/TSGR2_107bis/Docs/R2-1912467.zip R2-1912467_UE Assistance Information for EN-DC_v0.doc> [retrieved on 20191004]

## Description

### TECHNICAL FIELD

The embodiments of the present application relate to the field of communication, and more particularly, to a wireless communication methods and devices.

### BACKGROUND

Carrier Aggregation (CA) technology enables the terminal devices to use a plurality of component carriers to send and receive data at the same time, thereby improving data transmission rates, and improving system work efficiency. A Dual Connection (DC) scenario can be supported in a New Radio (NR) communication system.

However, the configuration of the CA and DC does not consider the relevant configuration of the Secondary Cell Group (SCG). For example, the related art only involves how to configure the SCG, and in the case of less downlink data or uplink data, the configured SCG may not be needed, which wastes radio resources and reduces the utilization efficiency of resources. WO2020/113999A1 form part of the related prior art.

### SUMMARY

There are provided a wireless communication methods and devices, which can improve the resource utilization efficiency.

The invention is carried out according to the appended independent claims. Optional features of the invention are carried out according to the dependent claims.

Based on the above technical solutions, by instructing the terminal device to deactivate the SCG through the first indication information, under the condition that the rate requirement of the terminal device is reduced, it can not only meet the needs of the user, but also save the radio resources of the terminal device and improve the efficiency of resource utilization.

### BRIEF DESCRIPTION OF THE DRAWINGS

FIG. 1 and FIG. 2 are schematic block diagrams of a system framework provided by the present application.
FIG. 3 and FIG. 4 are respectively examples of specific scenarios of an EN-DC shown in FIG. 2.
FIG. 5 is a schematic structural diagram of a bearer under the EN-DC system shown in FIG. 2.
FIG. 6 is a schematic structural diagram of a DC bearer under a 5GC system provided by an embodiment of the present application.
FIG. 7 to FIG. 9 are schematic block diagrams of a BWP of the terminal device provided by the embodiments of the present application.
FIG. 10 is a schematic flowchart of a wireless communication method provided by an embodiment of the present application.
FIGs. 11 and 12 are exemplary flowcharts of the wireless communication method shown in FIG. 10.
FIG. 13 is another schematic flowchart of a wireless communication method provided by an embodiment of the present application.
FIGs. 14 and 15 are exemplary flowcharts of the wireless communication method shown in FIG. 13.
FIG. 16 is a schematic block diagram of a node provided by an embodiment of the present application.
FIG. 17 is a schematic block diagram of a terminal device provided by an embodiment of the present application.
FIG. 18 is a schematic block diagram of a communication device provided by an embodiment of the present application.
FIG. 19 is a schematic block diagram of a chip provided by an embodiment of the present application.

### DETAILED DESCRIPTION

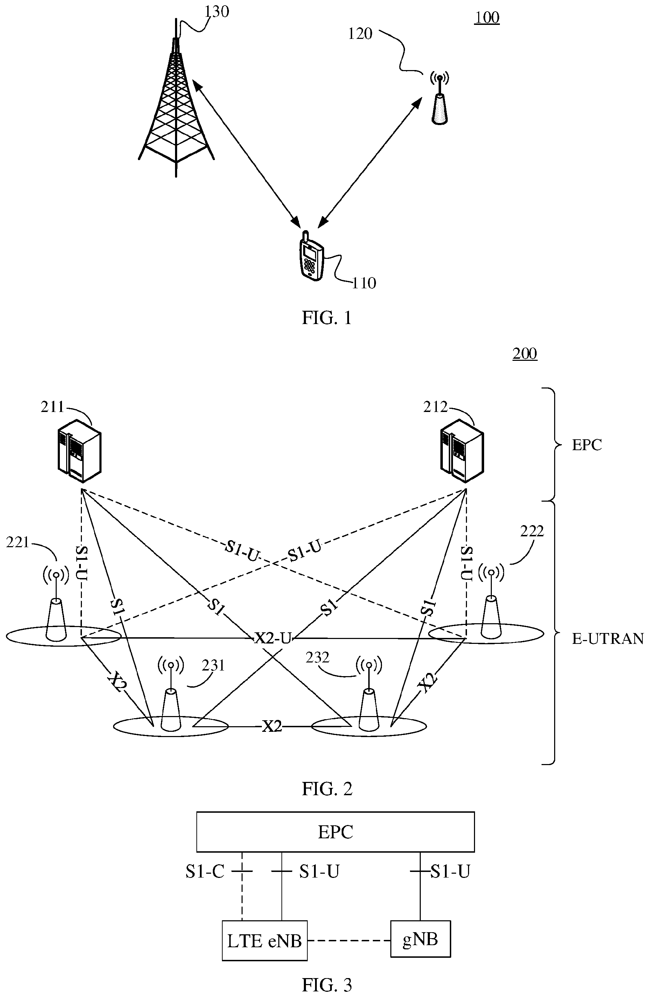

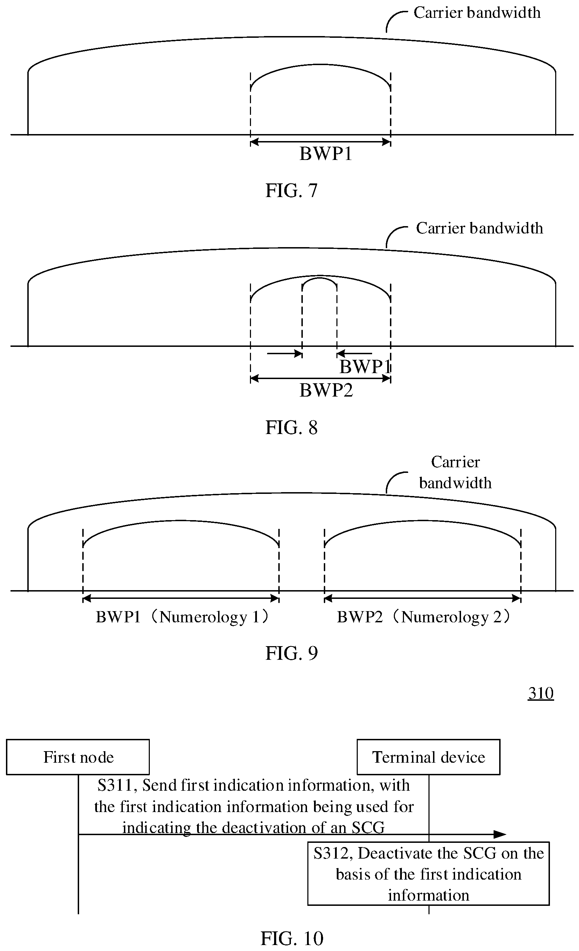

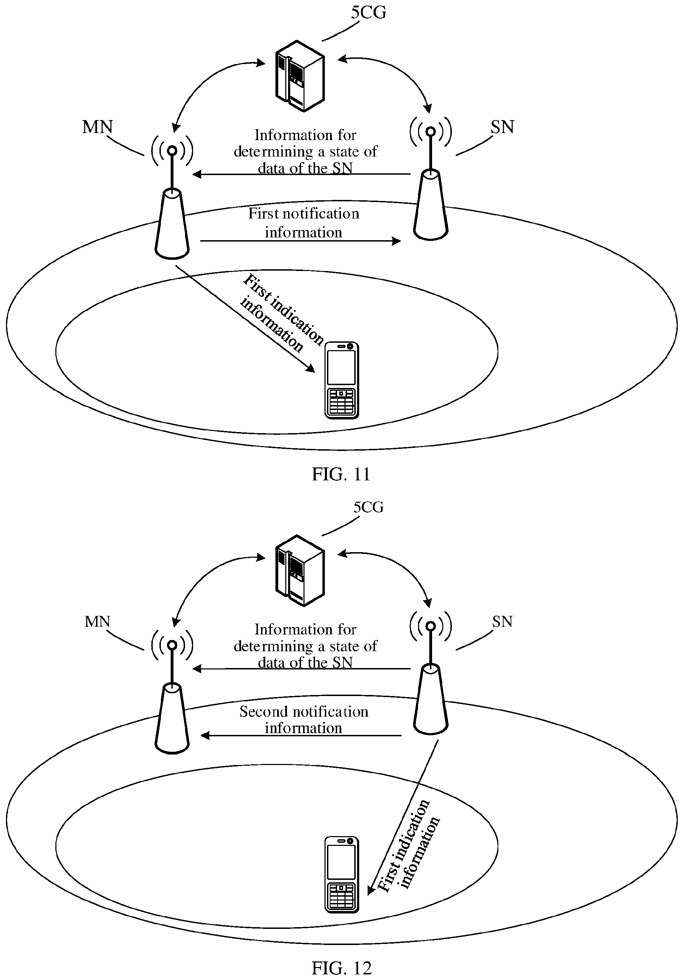

In the following, fig. 10 and 11 and their description is according to the claimed invention. The remaining description does not or does not fully correspond to the claimed invention but is useful for understanding the invention. FIG. 1 is a schematic diagram of a system 100 according to an embodiment of the present application.

As shown in FIG. 1, a terminal device 110 is connected to a first network device 130 in a first communication system and a second network device 120 in a second communication system. For example, the first network device 130 is a network device in the Long Term Evolution (LTE), and the second network device 120 is a network device in the New Radio (NR).

The first network device 130 and the second network device 120 may include a plurality of cells.

It should be understood that FIG. 1 is an example of a communication system according to an embodiment of the present application, and the embodiments of the present application are not limited to that shown in FIG. 1.

As an example, the communication system to which the embodiments of the present application are adapted may at least include a plurality of network devices in the first communication system and/or a plurality of network devices in the second communication system.

For example, the system 100 shown in FIG. 1 may include one primary network device in the first communication system and at least one secondary network device in the second communication system. At least one secondary network device is respectively connected to the one primary network device to form a multi-connection, and is respectively connected to the terminal device 110 to provide services for it. Specifically, the terminal device 110 may simultaneously establish a connection through the primary network device and the secondary network device.

Optionally, the connection established between the terminal device 110 and the primary network device is a primary connection, and the connection established between the terminal device 110 and the secondary network device is a secondary connection. The control signaling of the terminal device 110 may be transmitted through the primary connection, and the data of the terminal device 110 may be transmitted through the primary connection and the secondary connection at the same time, or only through the secondary connection.

As another example, the first communication system and the second communication system in the embodiments of the present application are different, but the specific categories of the first communication system and the second communication system are not limited.

For example, the first communication system and the second communication system may be various communication systems, such as: a Global System of Mobile communication (GSM) system, a Code Division Multiple Access (CCDMA) system, a Wideband Code Division Multiple Access (WCDMA) system, General Packet Radio Service (GPRS), a Long Term Evolution (LTE) system, an LTE Time Division Duplex (TDD), a Universal Mobile Telecommunication System (UMTS), etc.

In the system 100 shown in FIG. 1, the first network device 130 is used as the primary network device, and the second network device 120 is used as the secondary network device as an example.

The first network device 130 may be an LTE network device, and the second network device 120 may be an NR network device. Alternatively, the first network device 130 may be an NR network device, and the second network device 120 may be an LTE network device. Alternatively, both the first network device 130 and the second network device 120 may be NR network devices. Alternatively, the first network device 130 may be a GSM network device, a CDMA network device, or the like, and the second network device 120 may also be a GSM network device, a CDMA network device, or the like. Alternatively, the first network device 130 may be a Macrocell, and the second network device 120 may be a Microcell, a Picocell, or a Femtocell, etc.

Optionally, the first network device 130 and the second network device 120 may be any access network device.

Optionally, the access network device may be a Base Transceiver Station (BTS) in a Global System of Mobile communication (GSM) system or a Code Division Multiple Access (CDMA), or may be a NodeB (NB) in a Wideband Code Division Multiple Access (WCDMA) system, or may be an Evolutional Node B (eNB or eNodeB) in a Long Term Evolution (LTE) system.

Optionally, the access network device may also be a Next Generation Radio Access Network (NG RAN), or a base station (gNB) in an NR system, or a wireless controller in a Cloud Radio Access Network (CRAN), or the access network device may be a relay station, an access point, a vehicle-mounted device, a wearable device, or a network device in a future evolution of the Public Land Mobile Network (PLMN), etc.

Taking the first network device 130 as an LTE network device and the second network device 120 as an NR network device as an example, the technical solutions in the embodiments of the present application may be applied to wide-area Long Term Evolution (LTE) coverage and NR island coverage patterns. Optionally, a working mode between LTE and NR is tight interworking. The main application scenarios of 5G include: Enhanced Mobile Broadband (eMBB), Ultra-Reliable and Low Latency Communication (URLLC), and massive machine type of communication (mMTC). Among them, eMBB aims at obtaining multimedia content, services and data by users, and its demand is growing rapidly. As eMBB may be deployed in different scenarios, for example, indoor, urban, rural, etc., its capabilities and requirements are also quite different, thus it is improper to generalize them, and detail analysis may be performed in combination with specific deployment scenarios. Typical applications of URLLC include: industrial automation, power automation, telemedicine operations (surgery), traffic safety assurance, etc. Typical features of mMTC include: high connection density, small data volume, latency-insensitive services, low cost and long service life of the module.

Optionally, the terminal device 110 may be any terminal device. The terminal device may communicate with one or more Core Networks via a Radio Access Network (RAN), and may also be called an access terminal, a User Equipment (UE), a user unit, a user station, a mobile station, a mobile, a remote station, a remote terminal, a mobile device, a user terminal, a terminal, a wireless communication device, a user agent or a user apparatus. For example, it may be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, an in-vehicle device, a wearable device and a terminal device in 5G networks.

It should be understood that the terms "system" and "network" are often used interchangeably herein. The term "and/or" in the present disclosure is only an association relationship to describe the associated objects, indicating that there may be three kinds of relationships, for example, A and/or B may mean the following three relationships: A exists alone, A and B exist at the same time, and B exists alone. In addition, the character "/" in present disclosure generally indicates that the related objects have an "or" relationship.

FIG. 2 is a schematic block diagram of an EN-DC network architecture 200 according to an embodiment of the present disclosure.

As shown in FIG. 2, the network architecture 200 may be LTE-NR Dual Connectivity (EN-DC). That is, LTE acts as a Master Node (MN), and NR acts as a Secondary Node (SN), in other alternative embodiments, MN is also called MeNB, and SN is also called SeNB.

In the embodiments of the present application, an NR network architecture is added to the LTE architecture, thereby forming a network architecture 200. As shown in FIG. 2, the network architecture 200 may include an MME/S-GW 211, an MME/S-GW 212, a 5G base station (gNB) 221, a gNB 222, an Evolved Node B (eNB) 231, and an eNB 232. MME/S-GW 211 is connected to gNB 221 and gNB 222 through S1-U interface, and MME/S-GW 211 is connected to eNB 231 and eNB 232 through S1 interface. The MME/S-GW 212 is connected to the gNB 221 and the gNB 222 through the S1-U interface, and the MME/S-GW 212 is connected to the eNB 231 and the eNB 232 through the S1 interface. The connection between gNB 221 and gNB 222 is through X2-U. The eNB 231 and the eNB 232 are connected through X2. Similarly, the eNB 231 and the gNB 221 are connected through X2. The gNB 222 and the eNB 232 are connected through X2. In other words, the eNB and the eNB are directly interconnected through the X2 interface, and the eNB is connected to the EPC through the S1 interface. The S1 interface supports multi-to-multi connection between MME/S-GW and eNB, that is, one eNB may be connected to a plurality of MME/S-GWs, and a plurality of eNBs may also be connected to the same MME/S-GW at the same time. Similarly, the gNB and the gNB are directly interconnected through the X2-U interface, and the gNB is connected to the EPC through the S1-U interface. The S1-U interface supports multi-to-multi connection between MME/S-GW and gNB, that is, one gNB may be connected to a plurality of MME/S-GWs, and a plurality of gNBs may also be connected to the same MME/S-GW at the same time.

As shown in FIG. 2, in the embodiments of the present application, the MME/S-GW 211 and the MME/S-GW 212 belong to the Evolved Packet Core (EPC) of the LTE network, gNB 221, gNB 222, eNB 231 and eNB 232 constitutes the Evolved Universal Terrestrial Radio Access Network (E-UTRAN). However, the embodiments of the present application are not limited thereto, for example, the MME/S-GW 211 and the MME/S-GW 212 may be replaced by any core network device that communicates with the access network device.

Optionally, the core network device may be a 5G core network device, for example, an Access and Mobility Management Function (AMF), and for another example, a Session Management Function (SMF). Optionally, the core network device may also be an Evolved Packet Core (EPC) device of the LTE network, for example, a Session Management Function + Core Packet Gateway (SMF+PGW-C) device.

It should be understood that the SMF+PGW-C may simultaneously implement the functions that the SMF and the PGW-C can implement.

Optionally, in the embodiments of the present application, the AMF may perform information exchange with the SMF, for example, the SMF acquires some information on the radio access network side from the AMF.

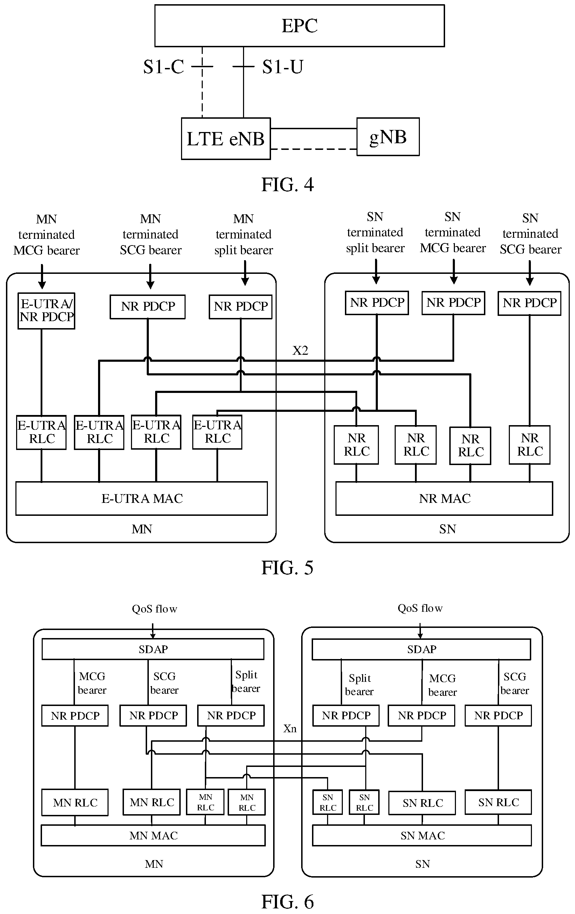

FIG. 3 and FIG. 4 are respectively examples of specific scenarios of the EN-DC shown in FIG. 2.

As shown in FIG. 3, in one scenario, MN and SN have S1-U connections with Evolved Packet Core network (EPC) respectively, or SN and MN are connected to EPC through S1-U interfaces respectively. For example, the MN may be a Long Term Evolution (LTE) Evolved Node B (eNB), and the SN is a 5G base station (gNB). On the control plane, S1-C terminates at the LTE eNB. The data flow is divided in the core network, and then is independently transmitted through the MN and the SN, and the SN plays the role of load sharing. This architecture may also be called a 3a mode or a scenario 3A. In this way, there is no special requirement for backhaul between the base stations, no special configuration is required for the Layer 2 protocol layer, there is no load sharing function between the base stations, and its peak rate depends entirely on the wireless capabilities of the MN and SN. In addition, during handover, the participation of the core network is required, and there is a problem that the data may be interrupted.

As shown in FIG. 4, in another scenario, there is an S1-U connection between the MN and the Evolved Packet Core network (EPC), or the MN is connected to the EPC through the S1-U interface. For example, the MN may be a Long Term Evolution (LTE) Evolved Node B (eNB), and the SN is a 5G base station (gNB). On the control plane, S1-C terminates at the LTE eNB. All downlink data streams are first transmitted to the MN, and then divided by the MN according to a certain algorithm and ratio, and then part of the data is sent to the SN by the X2 interface, and finally the data is sent to the UE on the MN and SN at the same time. This architecture may also be called for 3 mode or scenario 3. In this way, the user obtains downlink data from the two systems, which facilitates the realization of load sharing and resource coordination functions, and also helps to improve the user rate. In addition, the handover process has little impact on the core network, and because there are a plurality of wireless links, the handover delay is low. The disadvantage is that the backhaul between the base stations has a high requirement, the complexity of the Layer 2 protocol is high, and the backhaul between the base stations needs to implement functions such as flow control. In addition, the split bearer mode is only applicable to the downlink direction. In the uplink direction, the data flow is not divided and may be transmitted via the MN or SN.

In addition, in a dual connectivity network architecture (e.g., network architecture 200), the data plane radio bearer may be served independently by the MN or the SN, or may be served simultaneously by the MN and the SN. When it is only served by MN, it is called MCG bearer, that is, the serving cell group controlled by MN. When it is only served by SN, it is called SCG bearer, that is, the serving cell group controlled by SN. When it is served by the MN and the SN simultaneously, it is called a split bearer, also known as a branching bearer. Specifically, it can be divided into MCG split bearer and SCG split bearer. The differences between MCG split bearer and SCG split bearer mainly lie in the different functions of the Packet Data Convergence Protocol (PDCP) layer and the different keys of the PDCP layer.

FIG. 5 is a schematic structural diagram of a bearer under the EN-DC system shown in FIG. 2.

As shown in FIG. 5, the bearer of the terminal device under the DC may include: an MCG bearer with a termination point at the MN (MN terminated MCG bearer), a split bearer with a termination point at the MN (MN terminated split bearer), an SCG bearer with a termination point at the MN (MN terminated SCG bearer), an MCG bearer with a termination point at the SN (SN terminated MCG bearer), a split bearer with a termination point at the SN (SN terminated split bearer), and an SCG bearer with a termination point at the SN (SN terminated SCG bearer).

In other words, based on whether the Packet Data Convergence Protocol (PDCP) that the bearer passes through is located in the MN or the SN, the bearer may be divided into MN or SN terminated bearer, and based on the Radio Link Control (RLC) through which the bearer passes, the bearer may also be divided into MCG bearer or SCG bearer.

Among them, the MCG bearer, SCG bearer and split bearer served by the MN and/or SN pass through the corresponding Evolved Universal Terrestrial Radio Access (E-UTRA) Radio Link Control (RLC) or New Radio (NR) RLC layer, and reach the Media Access Control (MAC) layer of the corresponding E-UTRA or NR. Optionally, the MN terminated split bearer and the SN terminated split bearer may be collectively referred to as a Split bearer. Optionally, the split bearer may also be referred to as a separated bearer.

It should be understood that each sublayer may send data to a designated layer of the receiving end according to different data of the protocol data unit. The unprocessed data that enters each sublayer is called a service data unit (SDU), and the data that is processed by the sublayer to form a specific format is called a Protocol Data Unit (PDU). SDU is an information unit that is conveyed from a higher layer protocol to a lower layer protocol. The original data of the SDU is the PDU of the upper layer of the protocol. That is to say, the PDU formed by this layer is the SDU of the next layer.

For example, each logical channel of each terminal device has one RLC entity, and the data received by the RLC entity from the PDCP layer, or the data sent to the PDCP layer may be called RLC SDU (or PDCP PDU). The data received by the RLC entity from the MAC layer, or the data sent to the MAC layer may be called RLC PDU (or MAC SDU).

Exemplarily, in the embodiments of the present application, the RLC layer is located between the PDCP layer and the MAC layer, and the RLC layer may communicate with the PDCP layer through a Service Access Point (SAP), and communicate with the MAC layer through a logical channel. However, the embodiments of the present application are not limited thereto.

It should be noted that FIG. 1 to FIG. 5 are only examples of the present application, and should not be construed as a limitation of the present application.

For example, the network architecture 200 shown in FIG. 2 is only an exemplary description of a dual connectivity (DC) network architecture, and the embodiments of the present disclosure are not limited thereto. For example, in other alternative embodiments, the network architecture 200 may also be simply modified. For example, as an example, the MN and SN may not be connected to the EPC core network, but may be connected to the 5GC core network, that is, the DC network framework under the 5GC core network. Exemplarily, the DC network architecture includes, but is not limited to: NE-DC, 5GC-EN-DC and NR DC. In the NE-DC, NR acts as the MN node, eLTE acts as the SN node, and the MN and SN are respectively connected to the 5GC core network. In 5GC-EN-DC, eLTE is used as MN node, NR is used as SN node, MN and SN are respectively connected to 5GC core network. In NR DC, NR is used as MN node, NR is used as SN node, MN and SN are respectively connected to 5GC core network.

FIG. 6 is a schematic block diagram of a DC bearer under a 5GC core network provided by an embodiment of the present application.

As shown in FIG. 6, as shown in FIG. 5, the bearer of the terminal device under the DC may also include: MN terminated MCG bearer, MN terminated split bearer, MN terminated SCG bearer, SN terminated MCG bearer, SN terminated split bearer and SN terminated SCG bearer.

The MN and SN are respectively connected to the 5GC core network, the MN is connected to the SN through the Xn interface, and the MN and SN may respectively receive the Quality of Service (QoS) flow sent by the 5GC core network, and after the QoS flow passes through the Service Data Adaptation Protocol (SDAP), it may be carried on the corresponding bearer. The MCG bearer, SCG bearer, and split bearer served by the MN and/or SN pass through the corresponding MN RLC layer or SN RLC layer to reach the corresponding MN MAC layer or NR MAC layer.

In the 5G communication system, the maximum channel bandwidth may be 400MHZ (wideband carrier), which is very large compared to the maximum 20M bandwidth of LTE. If the UE keeps operating on the wideband carrier, the power consumption of the UE is increased. The power consumption of the UE can be optimized through the BandWidth Part (BWP). That is, the RF bandwidth of the UE can be adjusted according to the actual throughput of the UE. Another purpose of BWP is to trigger the coexistence of a plurality of Numerologies in one cell.

FIGs. 7 to 9 are schematic block diagrams of a BWP of a terminal device according to an embodiment of the present application.

For example, as shown in FIG. 7, if the rate of the UE is low, a part of the carrier bandwidth, such as BWP1, may be configured for the UE. For another example, as shown in FIG. 8, if the UE has a high rate requirement, a relatively large BWP may be configured for the UE, such as BWP2 larger than BWP1. For another example, as shown in FIG. 9, if the UE supports a high rate or works in the CA mode, a plurality of BWPs, such as BWP1 and BWP2, may be configured. Optionally, BWP1 and BWP2 may correspond to numerology 1 and numerology 2, respectively.

One UE may be configured with up to 4 UL BWPs and up to 4 DL BWPs through RRC dedicated signaling, but only one DL BWP and UL BWP can be activated at the same time. In the RRC dedicated signaling, the first activated BWP among the configured BWPs may be indicated. At the same time, when the UE is in the connected state, it can also switch between different BWPs through DCI. When the carrier in the inactive state enters the active state, the first activated BWP is the first activated BWP configured in the RRC. The configuration parameter of each BWP includes at least one of the following:
subcarrier spacing (subcarrierSpacing);
cyclic prefix (cyclicPrefix);
the first PRB of the BWP and the number of consecutive PRBs (locationAndBandwidth);
BWP identifier (bwp-Id); and
BWP common configuration parameter (bwp-Common) and dedicated configuration parameter (bwp-Dedicated).

In the process of monitoring the Radio Link Monitor (RLM), the UE only executes it on the activated BWP, and the inactivated BWP does not need to operate, and when switching between different BWPs, it does not need to reset the timer and counter associated with the RLM. For Radio Resource Management (RRM) measurement, no matter on which activated BWP the UE sends and receives data, it does not affect the RRM measurement. For the Channel Quality Indicator (CQI) measurement, the UE may only perform on the activated BWP.

When one carrier is deactivated and then activated through the MAC CE, the initial first activated BWP may be the BWP corresponding to the first activated BWP id in the RRC signaling.

Exemplarily, the value of the BWP id in the RRC signaling may be 0 to 4, and 0 is the initial BWP by default.

In DCI, the BWP indicator is 2bit. If the number of configured BWPs is less than or equal to 3, the BWP indicator may be 1, 2 or 3, and the BWP indicators 1, 2 and 3 correspond to BWP id 1, 2 and 3 respectively. If the number of BWPs is 4, the BWP indicators may be 0, 1, 2, and 3. Optionally, the BWP indicators 0, 1, 2, and 3 correspond to the BWPs configured according to a sequential index. Optionally, consecutive BWP ids are used when configuring BWP.

The corresponding relationship between the value of the BWP indicator field and the BWP is exemplarily described below with reference to Table 1.

**Table 1**

| Value of BWP indicator field | BWP |
|---|---|
| 2 bits | |
| 00 | First BWP configured by higher layer |
| 01 | Second BWP configured by higher layer |
| 10 | Third BWP configured by higher layer |
| 11 | Fourth BWP configured by higher layer |

As shown in Table 1, the value of the BWP indicator field may be 2 bits, where 00 may be used for indicating the first BWP. In other alternative embodiments, 00 may also transform the corresponding relationship in Table 1, which is not specifically limited in the embodiments of the present application.

FIG. 10 is a schematic flowchart of a wireless communication method 310 provided by the invention. The method 310 may be executed interactively by a first node and a terminal device. The first node is in the invention a master node (MN) Not being part of the invention is the alternative where the secondary node (SN) is the first node. For example, the first node may be any one of the 5G base station (gNB) 221, gNB 222, Evolved Node B (eNB) 231, eNB 232 shown in FIG. 2. The terminal device may be the terminal device shown in FIG. 1.

As shown in FIG. 10, the method 310 includes some or all of the following contents.

In S311, the first node sends first indication information to the terminal device, where the first indication information is used for instructing to deactivate a secondary cell group (SCG).

In S312, the terminal device deactivates the SCG based on the first indication information.

In other words, the terminal device receives the first indication information, and then the terminal device may deactivate the SCG based on the first indication information. Optionally, deactivating the SCG may also be referred to as suspending the SCG, and may also be referred to as dormancy SCG. Optionally, the dormancy SCG may cause all cells in the SCG to be in a dormancy state. Optionally, the terminal device may not monitor the PDCCH in the dormancy cell, or may not perform data sending and reception. Optionally, the terminal device may perform RRM, CSI measurement, beam management, etc. in the dormancy cell.

By instructing the terminal device to deactivate the SCG through the first indication information, in the case that the rate requirement of the terminal device is reduced, it can not only meet the needs of the user, but also save the radio resources of the terminal device and improve the utilization efficiency of the resources.

In the invention, the method 310 further includes:
the first node acquiring a state of data of the secondary node (SN).

After acquiring the state of the data of the SN, the first node determines whether the SCG needs to be deactivated based on the state of the data of the SN, and then, when it is determined that the SCG needs to be deactivated, the first node sends the first indication information to the terminal device.

In the invention, the state of the data of the SN includes an active state and an inactive state. Optionally, the information used to determine the state of the data of the SN may be indication information used for indicating that the state of the data of the SN is an active state or an inactive state, or may not be indication information, which is not specifically limited by the present application.

The active state may be understood as the SN having data to be sent to the terminal device. Accordingly, states other than the active state may become the active state.

For example, the inactive state may refer to at least one of the following: no downlink data arrives at the secondary node (SN) terminated bearer; no downlink data arrives at the SN from the user plane function (UPF); for the master node (MN) terminated SCG bearer, no downlink data is transmitted from the MN to the SN through the Xn interface and/or the X2 interface; the bearer with service data arriving does not need to use the radio resource of the SCG. Correspondingly, the active state refers to at least one of the following: downlink data arrives at the secondary node (SN) terminated bearer; there is downlink data arrives at the SN from the user plane function (UPF); for the master node (MN) terminated SCG bearer, there is downlink data transmitted from the MN to the SN through the Xn interface and/or the X2 interface; the bearer with service data arriving needs to use the radio resource of the SCG. Optionally, the radio resource of the SCG includes at least one of the following: a physical layer resource; an RLC layer resource, an MAC layer resource and a physical layer resource; a Service Data Adaptation Protocol (SDAP) layer resource, a Packet Data Convergence Protocol (PDCP) layer resource, an RLC layer resource, an MAC layer resource and a physical layer resource.

For another example, the inactive state refers to at least one of the following: the SN terminated SCG bearer has no service to be sent; the MN terminated SCG bearer has no service data to be sent; the MN terminated split bearer has no service data to be sent; the SN terminated split bearer has no service data to be sent. Correspondingly, the active state may refer to at least one of the following: the SN terminated SCG has a service to be sent; the MN terminated SCG has service data to be sent; the MN terminated split bearer has service data to be sent; the SN terminated split bearer has service data to be sent.

For another example, the inactive state refers to at least one of the following: none of the MN terminated split bearer, the MN terminated SCG bearer, the SN terminated MCG bearer, the SN terminated split bearer, and the SN terminated SCG bearer has service data to be sent; none of the MN terminated SCG bearer, the SN terminated MCG bearer, the SN terminated split bearer, and the SN terminated SCG bearer has service data to be sent; neither the MN terminated SCG bearer nor the SN terminated SCG bearer has service data to be sent. Correspondingly, the active state refers to at least one of the following: the MN terminated split bearer, the MN terminated SCG bearer, the SN terminated MCG bearer, the SN terminated split bearer, and the SN terminated SCG bearer all have service data to be sent; the MN terminated SCG bearer, the SN terminated MCG bearer, the SN terminated split bearer, and SN terminated SCG bearer all have service data to be sent; both the MN terminated SCG bearer and the SN terminated SCG bearer have service data to be sent.

The above-mentioned true inactive state and active state are only examples of the present application, and should not be construed as a limitation on the present application.

The bearer of the terminal device or the state of the cell in the SCG after the SCG is deactivated is exemplarily described below.

In some embodiments of the present application, the bearer of the terminal device is in at least one of the following:
a replication function of the packet data convergence protocol (PDCP) based on dual connectivity (DC) is deactivated, and the main branch is the MN branch; for the SN terminated split bearer or the MN terminated split bearer, the branch of the SCG is deactivated and the branch of the MN is the main branch; the SN terminated split bearer is deactivated; the MN terminated split bearer is deactivated; the SN terminated SCG bearer is deactivated; the SN terminated MCG bearer is kept activated; the MN terminated SCG bearer is deactivated.

For example, if the SCG is deactivated, the bearer of the terminal device may be in at least one of the following:
the replication function of the packet data convergence protocol (PDCP) based on dual connectivity (DC) is deactivated, and the main branch is the MN branch; for the SN terminated split bearer or the MN terminated split bearer, the branch of the SCG is deactivated and the branch of the MN is the main branch; the SN terminated split bearer is deactivated; the MN terminated split bearer is deactivated; the SN terminated SCG bearer is deactivated; the SN terminated MCG bearer is kept activated; the MN terminated SCG bearer is deactivated.

In other words, the terminal device may deactivate the SCG by deactivating the bearer of the terminal device.

By improving the service states of all bearers when deactivating the SCG, the operation of deactivating the SCG by the terminal device can be realized.

In some embodiments of the present application, the state of the serving cell in the SCG is in at least one of the following:
a deactivated state; an activated state or a deactivated state, and the activated BWPs of all active serving cells in the SCG are dormant BWPs; the RRC connection between the terminal device and the secondary node is in a deactivated state, and the RRC connection between the terminal device and the master node is in the connected state.

For example, if the SCG is deactivated, the state of the serving cell in the SCG is in at least one of the following:
a deactivated state; an activated state or a deactivated state, and the activated BWPs of all active serving cells in the SCG are dormant BWPs; the RRC connection between the terminal device and the secondary node is in a deactivated state, and the RRC connection between the terminal device and the master node is in the connected state.

In other words, the terminal device may deactivate the SCG by performing at least one of: deactivating the serving cell in the SCG, selecting a serving cell in an active state, and deactivating the RRC connection between the terminal device and the secondary node.

In some embodiments of the present application, the method 310 may further include:
the first node sending a radio resource management (RRM) measurement configuration to the terminal device, where the RRM measurement configuration is used for the terminal device to perform RRM measurement.

In other words, the terminal device receives the RRM measurement configuration sent by the first node.

Exemplarily, the RRM measurement configuration includes at least one of the following: an inter-frequency measurement configuration; an intra-frequency measurement configuration; a measurement configuration for idle state; a measurement configuration for quickly establishing the SCG and serving cell; and a measurement configuration used when the SCG is deactivated. Optionally, the RRM measurement configuration is carried in a system information block (SIB) and/or dedicated signaling.

For example, the terminal device performs RRM measurement; the terminal device sends a measurement result of the RRM measurement to the master node.

In other words, the terminal device may perform measurement based on the RRM measurement configuration configured by the MN; the terminal device may also perform measurement based on the RRM measurement configuration configured by the MN and the SN; the terminal device may also perform measurement based on the RRM measurement configuration configured by the MN, for example, the measurement is performed based on the inter-frequency and intra-frequency configurations in the MN-SIB, such as the configuration in SIB2/4; the terminal device may also perform measurement based on the measurement configuration for idle measurement in MN-SIB, for example, the measurement configuration for quickly establishing the SCG and the SCell; the terminal may also perform the measurement based on the measurement configuration configured by the MN-specific signaling for suspending the SCG.

In some embodiments of the present application, the first indication information is carried in at least one of the following: PDCCH, medium access control control element (MAC CE), signaling radio bearer SRB1 and signaling radio bearer SRB3. For example, the first indication information may be carried on MN SRB1 or SN SRB3, or may be carried on MN/SN PDCCH/MAC CE.

In some embodiments of the present application, the S311 may include:
if the state of the data of the secondary node (SN) is the inactive state, the first node sending the first indication information to the terminal device.

For example, after receiving the information sent by the SN for determining the state of the data of the SN, the MN determines whether to send the first indication information to the terminal device based on the state of the data of the SN. For example, if the state of the data of the SN is the inactive state mentioned above, the first indication information is sent to the terminal device.

For another example, the SN may directly determine the state of the data of the SN, and then, when it is determined that the state of the data of the SN is the inactive state, the first indication information is sent to the terminal device.

In some embodiments of the present application, the method 310 may further include:
the first node sending configuration information for deactivating the SCG to the terminal device.

For example, the MN or SN sends configuration information for deactivating the SCG to the terminal device. Optionally, the configuration information may include configuration information of the bearer and/or configuration information of the serving cell in the SCG. For example, the configuration information of the bearer may include information for indicating at least one of the following configurations: the replication function of the dual connectivity (DC)-based Packet data convergence protocol (PDCP) is deactivated, and the main branch is the MN branch; for the SN terminated split bearer or the MN terminated split bearer, the branch of the SCG is deactivated and the branch of the MN is the main branch; the SN terminated split bearer is deactivated; the MN terminated split bearer is deactivated; the SN terminated SCG bearer is deactivated; the SN terminated MCG bearer remains activated; and the MN terminated SCG bearer is deactivated. For another example, the configuration information of the serving cell in the SCG may include information for indicating at least one of the following configurations: deactivating the serving cell in the SCG; activating or deactivating the serving cell in the SCG, and the activated BWPs of all serving cells with active state in the SCG are dormant BWPs; and the RRC connection between the terminal device and the secondary node is in a deactivated state, and the RRC connection between the terminal device and the master node is in a connected state.

In some embodiments of the present application, the first node is a master node (MN).

FIG. 11 is a flowchart of a wireless communication in accordance with the present invention.

As shown in FIG. 11, the MN and the SN are respectively connected to a 5G core network (5GC), and the MN sends the first indication information to the terminal device. Optionally, the MN may send first notification information to the SN, where the first notification information is used to notify that the MN has instructed or is about to instruct the terminal device to deactivate the SCG. In other words, the SN receives the first notification information sent by the MN. Optionally, the MN receives the information sent by the SN for determining the state of the data of the SN. Optionally, the information for determining the state of the data of the SN may be used by the MN to determine whether the state of the data of the SN is an active state or an inactive state, so that the MN sends the first indication information to the terminal device after determining that the state of the data of the SN is inactive.

In some embodiments of the present application, the first node is a secondary node (SN).

FIG. 12 is an exemplary flowchart of a wireless communication method provided by an embodiment of the present application.

As shown in FIG. 12, the MN and the SN are respectively connected to a 5G core network (5GC), and the SN sends the first indication information to the terminal device. Optionally, the SN may send second notification information to the MN, and the second notification information is used to notify that the SN has instructed or is about to instruct the terminal device to deactivate the SCG. In other words, the MN receives the second notification information sent by the SN. Optionally, the MN receives the information sent by the SN for determining the state of the data of the SN. Optionally, the information for determining the state of the data of the SN may be used by the MN to determine whether the state of the data of the SN is an active state or an inactive state.

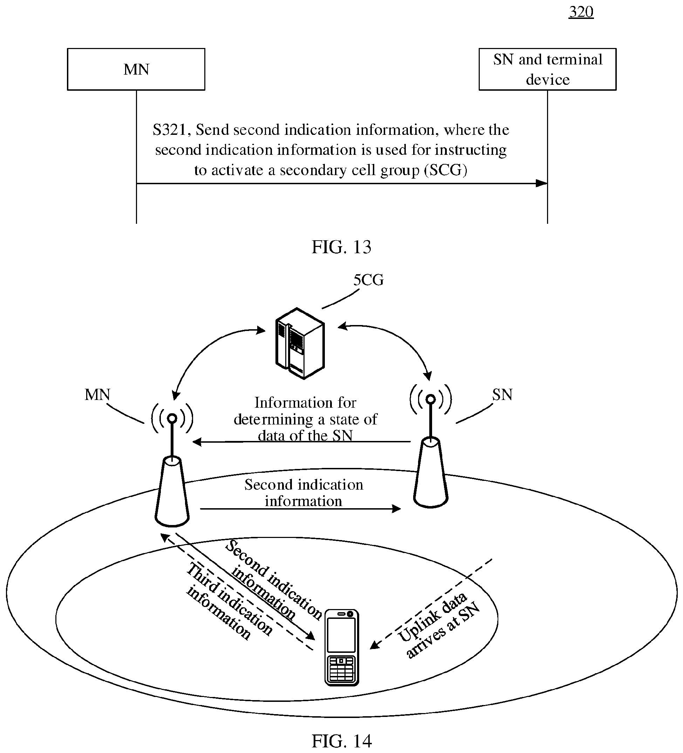

The wireless communication method according to the embodiments of the present application is described in detail from the perspective of deactivating the SCG with reference to FIGs. 10 to 12. Hereinafter, the wireless communication method according to the embodiments of the present application will be described below from the perspective of activating the SCG with reference to FIGs. 13 to 15.

FIG. 13 is a schematic flowchart of a wireless communication method 320 provided by an embodiment of the present application. The method 320 may be performed interactively by a master node (MN) and a terminal device, or the method 320 may be performed interactively by an MN and an SN. For example, the MN may be gNB 221 or gNB 222 shown in FIG. 2. The SN may be the eNB 231 or the eNB 232 as shown in FIG. 2. The terminal device may be the terminal device shown in FIG. 1.

As shown in FIG. 13, the method 320 includes some or all of the following contents.

In S321, the master node (MN) sends second indication information to the terminal device and the secondary node (SN) respectively, where the second indication information is used for instructing to activate a secondary cell group (SCG).

In other words, the terminal device and the SN activate the SCG through the second indication information. Optionally, deactivating the SCG may also be referred to as hanging the SCG or suspending the SCG.

For example, the SN receives the second indication information sent by the MN through an Xn interface or an X2 interface. Optionally, the second indication information includes identification information of a target primary secondary cell group cell (PSCell) and information used for indicating an activation state of the secondary cell. Optionally, the information used for indicating the activation state of the secondary cell is used for indicating that the activation state of the secondary cell is an activated state or a deactivated state, and/or the information used for indicating the activation state of the secondary cell is used for indicating an identifier of the activated BWP of the secondary cell. Optionally, the second indication information includes a measurement result reported by the terminal device, and the measurement result is used by the MN or the secondary node (SN) to determine an activation state of a secondary cell (SCell) and/or a target primary secondary cell group cell (primary secondary cell, PSCell). The second indication information received by the SN may simultaneously include identification information of the target primary secondary cell (PSCell), information used for indicating the activation state of the secondary cell, and the measurement result. Optionally, the SN may also send information for indicating the target primary secondary cell (PSCell) to the MN. For example, the SN determines the target PSCell based on the measurement result, and may send the information for indicating the target PSCell to the MN.

By instructing the terminal device to activate the SCG through the second indication information, in the case that the terminal device has an increased rate requirement, it can meet the needs of the user, which is equivalent to being able to dynamically use the resources of the SCG, thereby improving the utilization efficiency of the resources of the terminal device.

In some embodiments of the present application, the S321 may include:
the MN receiving information sent by the secondary node (SN) for determining the state of the data of the SN; if the state of the data of the SN is in an active state, the MN sending the second indication information to the terminal device.

In other words, the SN sends the information for determining the state of the data of the SN to the MN; if the state of the data of the SN is in an active state, the SN receives the second indication information sent by the MN.

In some embodiments of the present application, the state of the data of the SN includes an active state and an inactive state. Optionally, the information used for determining the state of the data of the SN may be indication information used for indicating that the state of the data of the SN is an active state or an inactive state, or may not be indication information, which is not specifically limited by the present application.

The active state may be understood as the SN having data to be sent to the terminal device. Accordingly, states other than the active state may become the active state.

For example, the inactive state may refer to at least one of the following: no downlink data arrives at the secondary node (SN) terminated bearer; no downlink data arrives at the SN from the user plane function (UPF); for the master node (MN) terminated SCG bearer, no downlink data is transmitted from the MN to the SN through the Xn interface and/or the X2 interface; the bearer with service data arriving does not need to use the radio resource of the SCG. Correspondingly, the active state refers to at least one of the following: downlink data arrives at the secondary node (SN) terminated bearer; downlink data arrives at the SN from the user plane function (UPF); for the master node (MN) terminated SCG bearer, the downlink data is transmitted from the MN to the SN through the Xn interface and/or the X2 interface; the bearer with service data arriving needs to use the radio resource of the SCG. Optionally, the radio resource of the SCG includes at least one of the following: a physical layer resource; an RLC layer resource, an MAC layer resource and a physical layer resource; a Service Data Adaptation Protocol (SDAP) layer resource, a Packet Data Convergence Protocol (PDCP) layer resource, an RLC layer resource, an MAC layer resource and a physical layer resource.

For another example, the inactive state refers to at least one of the following: the SN terminated SCG bearer has no service to be sent; the MN terminated SCG bearer has no service data to be sent; the MN terminated split bearer has no service data to be sent; the SN terminated split bearer has no service data to be sent. Correspondingly, the active state may refer to at least one of the following: the SN terminated SCG bearer has a service to be sent; the MN terminated SCG bearer has service data to be sent; the MN terminated split bearer has service data to be sent; the SN terminated split bearer has service data to be sent.

For another example, the inactive state refers to at least one of the following: none of the MN terminated split bearer, the MN terminated SCG bearer, the SN terminated MCG bearer, the SN terminated split bearer, and the SN terminated SCG bearer has service data to be sent; none of the MN terminated SCG bearer, the SN terminated MCG bearer, the SN terminated split bearer, and the SN terminated SCG bearer has service data to be sent; neither the MN terminated SCG bearer nor the SN terminated SCG bearer has service data to be sent. Correspondingly, the active state refers to at least one of the following: the MN terminated split bearer, the MN terminated SCG bearer, the SN terminated MCG bearer, the SN terminated split bearer, and the SN terminated SCG bearer all have service data to be sent; the MN terminated SCG bearer, the SN terminated MCG bearer, the SN terminated split bearer, and the SN terminated SCG bearer all have service data to be sent; both the MN terminated SCG bearer and the SN terminated SCG bearer have service data to be sent.

The above-mentioned true inactive state and active state are only examples of the present application, and should not be construed as a limitation on the present application.

In some embodiments of the present application, the method 320 may further include:
the MN receiving third indication information sent by the terminal device, where the third indication information is used for indicating that the SCG needs to be activated.

In other words, the terminal device sends third indication information to the MN, and the third indication information is used for indicating that the SCG needs to be activated.

For example, if a bearer on which uplink data arrives at the SN and/or a bearer at which the uplink data arrives needs to use the radio resource of the SCG, the MN receives the third indication information sent by the terminal device. In other words, if the bearer on which uplink data arrives at the SN and/or the bearer at which uplink data arrives needs to use the radio resource of the SCG, the MN receives the third indication information sent by the terminal device. Optionally, the third indication information includes a bearer identifier and/or information used for indicating that the uplink data arrives at the SN. Optionally, the third indication information is carried on the radio resource control (RRC) signaling or the medium access control control element (MAC CE). Optionally, the third indication information includes a measurement result reported by the terminal device, and the measurement result is used by the MN or the secondary node (SN) to determine the activation state of the secondary cell (SCell) and/or a target primary secondary cell (PSCell).

The measurement result may not be carried in the third indication information, but may be carried in other information and reported to the MN or SN, which is not specifically limited in the present application.

In some embodiments of the present application, the MN sends the second indication information to the SN through an Xn interface or an X2 interface. Optionally, the second indication information includes identification information of the target primary secondary cell (PSCell) and information used for indicating the activation state of the secondary cell. Optionally, the information used for indicating the activation state of the secondary cell is used for indicating that the activation state of the secondary cell is an activated state or a deactivated state, and/or the information used for indicating the activation state of the secondary cell is used for indicating an identifier of the activated BWP of the secondary cell. Optionally, the second indication information includes a measurement result reported by the terminal device, and the measurement result is used by the MN or the secondary node (SN) to determine the activation state of the secondary cell (SCell) and/or the target primary secondary cell (PSCell).

Exemplarily, the method 320 may further include:
the MN receiving information sent by the SN and used for indicating a target primary secondary cell (PSCell).

The second indication information sent by the MN to the terminal device will be described below.

In some embodiments of the present application, the master node (MN) sends the second indication information to the terminal device, and the second indication information is carried on at least one of the following: a radio resource control (RRC) signaling, a Physical downlink control (PDCCH) and a medium access control control element (MAC CE). In other words, activating the SCG through the PDCCH or the MAC CE is equivalent to triggering the random access procedure of other cells through the PDCCH or the MAC CE. Optionally, the second indication information includes at least one of the following information: a key used to calculate the SCG; a random access channel (RACH) resource used by the terminal device to initiate a random access procedure to the SCG; a cell index of PSCell or a serving cell where the RACH resource is located; information used for indicating an initial state of the serving cell in the SCG; information used for indicating an initial state cell of the dormant bandwidth part (BWP) in the serving cell in the SCG. For example, the information for indicating the activation state of the serving cell in the SCG includes at least one first bit, and the at least one first bit is respectively used for indicating that the initial state of at least one serving cell in the SCG is the active state or deactivated state. For example, the information for indicating the active state cell of the dormant bandwidth part (BWP) in the serving cell in the SCG includes at least one second bit, and the at least one second bit is respectively used for indicating that the initial state of the dormant BWP of at least one serving cell in the SCG is an activated state or a deactivated state. Optionally, the terminal device may perform the RACH procedure on the target PSCell indicated by the second indication information. For example, the terminal device may calculate the key of the SCG and restore the SCG based on the calculated key.

For example, the second indication information may also be used for indicating that the SCG of the terminal device is not to be changed, or the second indication information may also be used for indicating that the source SN of the terminal device is not to be changed.

FIG. 14 is an example of a wireless communication method provided by an embodiment of the present application.

As shown in FIG. 14, the SN sends information for determining the state of the data of the SN to the MN, so that the MN determines when to send the second indication information to the SN and the terminal device. When the terminal device has uplink data that needs to reach the SN, the terminal device may also send the third indication information to the MN to indicate that the terminal device needs to activate the SCG.

In other embodiments of the present application, the MN sends SCG configuration information to the terminal device, where the SCG configuration information includes the second indication information. Optionally, the SCG configuration information is carried on the radio resource control (RRC) signaling. For example, through the RRC dedicated signaling, the SN may be replaced in the process of activating the SCG, and accordingly, the process of replacing the SN can be simplified, the activation efficiency can be improved, and the utilization rate of the resources can be improved. For example, the RRC signaling is an RRC reconfiguration message or an RRC recovery message. Optionally, the MN sends adding request information to the target node through an Xn interface or an X2 interface, where the adding request information is used to request to add the target node as a secondary node of the terminal device. For example, if the MN determines that the secondary node of the terminal device needs to be changed from the source node to the target node, the MN sends the adding request information to the target node through the Xn interface or the X2 interface. Exemplarily, the adding request information includes identification information of the target primary secondary cell (PSCell) and information used for indicating the activation state of the secondary cell. For example, the information used for indicating the activation state of the secondary cell is used for indicating that the activation state of the secondary cell is the activated state or the deactivated state, and/or the information used for indicating the activation state of the secondary cell is used for indicating the identifier of the activated BWP of the secondary cell. Exemplarily, the adding request information includes a measurement result reported by the terminal device, and the measurement result is used by the target node to determine the activation state of the secondary cell (SCell) and/or the target primary secondary cell (PSCell). The adding request information may also include the identification information of the target PSCell, the information used for indicating the activation state of the secondary cell, and the measurement result. Optionally, the MN sends release request information to the source node, where the release request information is used to request the source node to release the resource of the SCG. In other words, the SN receives the release request information sent by the MN.

For example, the second indication information may also be used for instructing to change the SCG of the terminal device, or the second indication information may also be used for instructing to change the source SN of the terminal device.

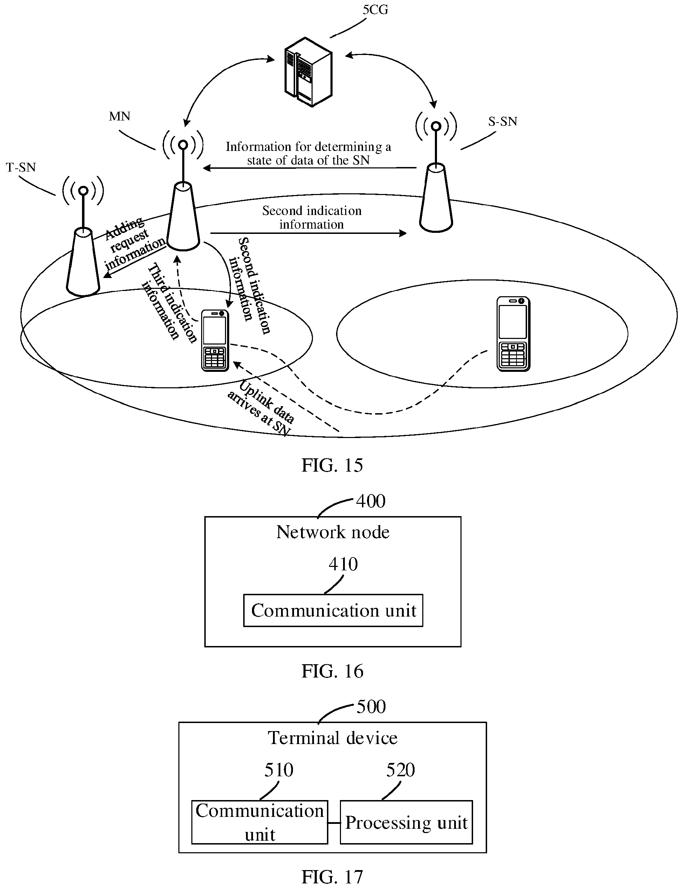

FIG. 15 is an example of a wireless communication method provided by an embodiment of the present application.

As shown in FIG. 15, the source SN (S-SN) sends the information for determining the state of the data of the S-SN to the MN, so that the MN can determine when to send the second indication information to the S-SN and the terminal device. When the terminal device has uplink data that needs to reach the SN (e.g., S-SN), the terminal device may also send the third indication information to the MN to indicate that the terminal device needs to activate the SCG. In addition, when the SN of the terminal device needs to be changed, the MN may also send adding request information to the target SN (T-SN).

It should be understood that the steps in the method 320 may refer to the corresponding steps in the method 310, or may even be combined with the method 320 and the method 310, which are not repeated here for brevity.

The preferred embodiments of the present application have been described in detail above with reference to the accompanying drawings. However, the present application is not limited to the specific details of the above-mentioned embodiments. Within the scope of the technical concept of the present application, various simple modifications can be made to the technical solutions of the present application. These simple modifications all belong to the protection scope of the present application. For example, the specific technical features described in the above-mentioned specific embodiments can be combined in any suitable manner unless they are conflict. In order to avoid unnecessary repetition, the present application does not describe any possible combination manners. For another example, the various embodiments of the present application can also be combined arbitrarily, as long as they do not violate the idea of the present application, they should also be regarded as the content disclosed in the present application.

It should be understood that in the various method embodiments of the present application, the size of the sequence numbers of the above-mentioned processes does not mean the sequence of execution, and the execution sequence of each process should be determined by its functions and internal logic, and should not constitute limitation to the implementation procedure of the embodiments of the present application.

The method embodiments of the present application are described in detail above with reference to FIGs. 10 to 15, and the apparatus embodiments of the present application are described in detail below with reference to FIGs. 16 to 19.

FIG. 16 is a schematic block diagram of a network node 400 according to an embodiment of the present application. It should be understood that the network node 400 may be the first node mentioned above, the MN mentioned above, or the SN mentioned above.

The network node serving as the first node will be described below with reference to FIG. 16.

As shown in FIG. 16, the network node 400 may include:
a communication unit 410, configured to send first indication information to a terminal device, where the first indication information is used for instructing to deactivate a secondary cell group (SCG).

In some embodiments of the present application, the communication unit 410 is further configured to: acquire a state of data of a secondary node (SN).

In some embodiments of the present application, the state of the data of the SN includes an active state and an inactive state.

In some embodiments of the present application, the inactive state refers to at least one of the following:
no downlink data arrives at the secondary node (SN) terminated bearer; no downlink data arrives at the SN from a user plane function (UPF); for a master node (MN) terminated SCG bearer, no downlink data is transferred from the MN to the SN through an Xn interface and/or an X2 interface; a bearer with service data arriving does not need to use a radio resource of the SCG.

In some embodiments of the present application, the active state refers to at least one of the following:
downlink data arrives at a secondary node (SN) terminated bearer; downlink data arrives at the SN from a user plane function (UPF); for a master node (MN) terminated SCG bearer, downlink data is transferred from the MN to the SN through an Xn interface and/or an X2 interface; a bearer with service data arriving needs to use a radio resource of the SCG.

In some embodiments of the present application, the radio resource of the SCG includes at least one of the following:
a physical layer resource; a radio link control (RLC) layer resource, a medium access control (MAC) layer resource and a physical layer resource; a Service Data Adaptation Protocol (SDAP) layer resource, a Packet Data Convergence Protocol (PDCP) layer resource, an RLC layer resource, an MAC layer resource and a physical layer resource.

In some embodiments of the present application, the inactive state refers to at least one of the following:
an SN terminated SCG bearer has no service to be sent; an MN terminated SCG bearer has no service data to be sent; an MN terminated split bearer has no service data to be sent; an SN terminated split bearer has no service data to be sent.

In some embodiments of the present application, the active state refers to at least one of the following:
an SN terminated SCG bearer has a service to be sent; an MN terminated SCG bearer has service data to be sent; an MN terminated split bearer has service data to be sent; an SN terminated split bearer has service data to be sent.

In some embodiments of the present application, the inactive state refers to at least one of the following:
none of an MN terminated split bearer, an MN terminated SCG bearer, an SN terminated MCG bearer, an SN terminated split bearer and an SN terminated SCG bearer has service data to be sent; none of the MN terminated SCG bearer, the SN terminated MCG bearer, the SN terminated split bearer, and the SN terminated SCG bearer has service data to be sent; neither the MN terminated SCG bearer nor the SN terminated SCG bearer has service data to be sent.

In some embodiments of the present application, the active state refers to at least one of the following:
an MN terminated split bearer, an MN terminated SCG bearer, an SN terminated MCG bearer, an SN terminated split bearer and an SN terminated SCG bearer all have service data to be sent; the MN terminated SCG bearer, the SN terminated MCG bearer, the SN terminated split bearer, and the SN terminated SCG bearer all have service data to be sent; both the MN terminated SCG bearer and the SN terminated SCG bearer have service data to be sent.

In some embodiments of the present application, the bearer of the terminal device is at least one of the following:
a replication function of a packet data convergence protocol (PDCP) based on dual connectivity (DC) is deactivated, and a main branch is an MN branch; for an SN terminated split bearer or an MN terminated split bearer, a branch of the SCG is deactivated and a branch of the MN is the main branch; the SN terminated split bearer is deactivated; the MN terminated split bearer is deactivated; the SN terminated SCG bearer is deactivated; the SN terminated MCG bearer remains active; the MN terminated SCG bearer is deactivated.

In some embodiments of the present application, the state of the serving cell in the SCG is in at least one of the following:
a deactivated state; an activated state or a deactivated state, and activated BWPs of all serving cells in the activated state in the SCG are dormant BWPs; an RRC connection between the terminal device and the secondary node is in the deactivated state, and an RRC connection between the terminal device and the master node is in a connected state.

In some embodiments of the present application, the communication unit 410 is further configured to:
sending a radio resource management (RRM) measurement configuration to the terminal device, where the RRM measurement configuration is used by the terminal device to perform RRM measurement.

In some embodiments of the present application, the RRM measurement configuration includes at least one of the following:
an inter-frequency measurement configuration; an intra-frequency measurement configuration; a measurement configuration for idle state; a measurement configuration for quickly establishing the SCG and the serving cell; a measurement configuration when the SCG is deactivated.

In some embodiments of the present application, the RRM measurement configuration is carried in a system information block (SIB) and/or dedicated signaling.

In some embodiments of the present application, the first indication information is carried in at least one of the following: a physical downlink control (PDCCH), a medium access control control element (MAC CE), a signaling radio bearer SRB1 and a signaling radio bearer SRB3.

In some embodiments of the present application, the communication unit 410 is specifically configured to:
if the state of the data of the secondary node (SN) is the inactive state, send the first indication information to the terminal device.

In some embodiments of the present application, the communication unit 410 is further configured to:
send configuration information for deactivating the SCG to the terminal device.

In some embodiments of the present application, the first node is a master node (MN), and the communication unit 410 is further configured to:
send first notification information to the secondary node (SN), where the first notification information is used to notify that the MN has instructed or is about to instruct the terminal device to deactivate the SCG.

In some embodiments of the present application, the communication unit 410 is further configured to:
receive information sent by the SN for determining the state of the data of the SN.

In some embodiments of the present application, the first node is a secondary node (SN), and the communication unit 410 is further configured to:
send second notification information to the master node (MN), where the second notification information is used to notify that the SN has instructed or is about to instruct the terminal device to deactivate the SCG.

In some embodiments of the present application, the communication unit 410 is further configured to:
send information for determining the state of the data of the SN to the MN.

The network node for the MN will be described below with reference to FIG. 16.

As shown in FIG. 16, the network node 410 may include:
a communication unit 410, configured to send second indication information to a terminal device and a secondary node (SN), respectively, where the second indication information is used for instructing to activate a secondary cell group (SCG).

In some embodiments of the present application, the communication unit 410 is specifically configured to:
receive information sent by the secondary node (SN) for determining a state of data of the SN;
if the state of the data of the SN is in an active state, send the second indication information to the terminal device.

In some embodiments of the present application, the state of the data of the SN includes an active state and an inactive state.

In some embodiments of the present application, the inactive state refers to at least one of the following:
no downlink data arrives at a secondary node (SN) terminated bearer; no downlink data arrives at the SN from a user plane function (UPF); for a master node (MN) terminated SCG bearer, no downlink data is transferred from the MN to the SN through an Xn interface and/or an X2 interface; a bearer with service data arriving does not need to use a radio resource of the SCG.

In some embodiments of the present application, the active state refers to at least one of the following:
downlink data arrives at a secondary node (SN) terminated bearer; downlink data arrives at the SN from a user plane function (UPF); for a master node (MN) terminated SCG bearer, downlink data is transferred from the MN to the SN through an Xn interface and/or an X2 interface; a bearer with service data arriving needs to use a radio resource of the SCG.

In some embodiments of the present application, the radio resource of the SCG includes at least one of the following:
a physical layer resource; a radio link control (RLC) layer resource, a medium access control (MAC) layer resource and a physical layer resource; a Service Data Adaptation Protocol (SDAP) layer resource, a Packet Data Convergence Protocol (PDCP) layer resource, an RLC layer resource, an MAC layer resource and a physical layer resource.

In some embodiments of the present application, the inactive state refers to at least one of the following:
an SN terminated SCG bearer has no service to be sent; an MN terminated SCG bearer has no service data to be sent; an MN terminated split bearer has no service data to be sent; an SN terminated split bearer has no service data to be sent.

In some embodiments of the present application, the active state refers to at least one of the following:
an SN terminated SCG bearer has a service to be sent; an MN terminated SCG bearer has service data to be sent; an MN terminated split bearer has service data to be sent; an SN terminated split bearer has service data to be sent.

In some embodiments of the present application, the inactive state refers to at least one of the following:
none of an MN terminated split bearer, an MN terminated SCG bearer, an SN terminated MCG bearer, an SN terminated split bearer and an SN terminated SCG bearer has service data to be sent; none of the MN terminated SCG bearer, the SN terminated MCG bearer, the SN terminated split bearer, and the SN terminated SCG bearer has service data to be sent; neither the MN terminated SCG bearer nor the SN terminated SCG bearer has service data to be sent.

In some embodiments of the present application, the active state refers to at least one of the following:
an MN terminated split bearer, an MN terminated SCG bearer, an SN terminated MCG bearer, an SN terminated split bearer and an SN terminated SCG bearer all have service data to be sent; the MN terminated SCG bearer, the SN terminated MCG bearer, the SN terminated split bearer, and the SN terminated SCG bearer all have service data to be sent; both the MN terminated SCG bearer and the SN terminated SCG bearer have service data to be sent.

In some embodiments of the present application, the communication unit 410 is further configured to:
receive third indication information sent by the terminal device, where the third indication information is used for indicating that the SCG needs to be activated.

In some embodiments of the present application, the communication unit 410 is specifically configured to:
if a bearer on which uplink data arrives at the SN and/or a bearer at which the uplink data arrives needs to use the radio resource of the SCG, receive the third indication information sent by the terminal device.

In some embodiments of the present application, the third indication information includes a bearer identifier and/or information used for indicating that the uplink data arrives at the SN.

In some embodiments of the present application, the third indication information is carried on a radio resource control (RRC) signaling or a medium access control control element MAC CE.

In some embodiments of the present application, the third indication information includes a measurement result reported by the terminal device, and the measurement result is used by the MN or the secondary node (SN) to determine an activation state of the secondary cell (SCell) and/or a target primary secondary cell (PSCell).

In some embodiments of the present application, the communication unit 410 is specifically configured to:
send the second indication information to the SN through an Xn interface or an X2 interface.

In some embodiments of the present application, the second indication information includes identification information of a target primary secondary cell (PSCell) and information used for indicating an activation state of the secondary cell.

In some embodiments of the present application, the information used for indicating the activation state of the secondary cell is used for indicating that the activation state of the secondary cell is an activated state or a deactivated state, and/or the information used for indicating the activation state of the secondary cell is used for indicating an identifier of an activated BWP of the secondary cell.

In some embodiments of the present application, the second indication information includes a measurement result reported by the terminal device, and the measurement result is used by the MN or the secondary node (SN) to determine the activation state of the secondary cell (SCell) and/or a target primary secondary cell (PSCell).

In some embodiments of the present application, the communication unit 410 is further configured to:
receive information sent by the SN and used for indicating a target primary secondary cell (PSCell).

In some embodiments of the present application, the master node (MN) sends the second indication information to the terminal device, and the second indication information is carried in at least one of the following items: a radio resource control (RRC) signaling, a Physical downlink control (PDCCH) and a medium access control control element (MAC CE).

In some embodiments of the present application, the second indication information includes at least one of the following information:
a key for calculating the SCG; a random access channel (RACH) resource used by the terminal device to initiate a random access procedure to the SCG; a cell index of a serving cell where the PSCell or the RACH resource is located; information used for indicating an initial state of a serving cell in the SCG; information used for indicating an initial state cell of a dormant bandwidth part (BWP) in the serving cell in the SCG.

In some embodiments of the present application, the information for indicating the activation state of the serving cell in the SCG includes at least one first bit, and the at least one first bit is respectively used for indicating an initial state of at least one serving cell in the SCG to be an activated state or a deactivated state.

In some embodiments of the present application, the information for indicating the active state cell of the dormant bandwidth part (BWP) in the serving cell in the SCG includes at least one second bit, and the at least one second bit is respectively used for indicating an initial state of a dormant BWP of at least one serving cell in the SCG to be an activated state or a deactivated state.

In some embodiments of the present application, the communication unit 410 is specifically configured to:
send SCG configuration information to the terminal device, where the SCG configuration information includes the second indication information.

In some embodiments of the present application, the SCG configuration information is carried on radio resource control (RRC) signaling.

In some embodiments of the present application, the RRC signaling is an RRC reconfiguration message or an RRC recovery message.

In some embodiments of the present application, the communication unit 410 is further configured to:
send adding request information to a target node through an Xn interface or an X2 interface, where the adding request information is used for requesting to add the target node as a secondary node of the terminal device.

In some embodiments of the present application, the adding request information includes identification information of a target primary secondary cell (PSCell) and information used for indicating an activation state of the secondary cell.

In some embodiments of the present application, the information used for indicating the activation state of the secondary cell is used for indicating that the activation state of the secondary cell is an activated state or a deactivated state, and/or the information used for indicating the activation state of the secondary cell is used for indicating an identifier of an activated BWP of the secondary cell.

In some embodiments of the present application, the adding request information includes a measurement result reported by the terminal device, and the measurement result is used by the target node to determine the activation state of the secondary cell (SCell) and/or a target primary secondary cell (PSCell).

In some embodiments of the present application, the communication unit 410 is specifically configured to:
if the MN determines that the secondary node of the terminal device needs to be changed from a source node to the target node, send the adding request information to the target node through the Xn interface or the X2 interface.

In some embodiments of the present application, the communication unit 410 is further configured to:
send release request information to the source node, where the release request information is used for requesting the source node to release a resource of the SCG.

The network node used for the SN will be described below with reference to FIG. 16.

As shown in FIG. 16, the network node 400 may include:
a communication unit 410, configured to receive second indication information sent by a master node (MN), where the second indication information is used for instructing to activate a secondary cell group (SCG).

In some embodiments of the present application, the communication unit 410 is specifically configured to:
send information for determining a state of data of the SN to the MN; if the state of the data of the SN is in an active state, receive the second indication information sent by the MN.

In some embodiments of the present application, the state of the data of the SN includes an active state and an inactive state.

In some embodiments of the present application, the inactive state refers to at least one of the following:
no downlink data arrives at a secondary node (SN) terminated bearer; no downlink data arrives at the SN from a user plane function (UPF); for a master node (MN) terminated SCG bearer, no downlink data is transferred from the MN to the SN through an Xn interface and/or an X2 interface; a bearer with service data arriving does not need to use a radio resource of the SCG.

In some embodiments of the present application, the active state refers to at least one of the following:
downlink data arrives at a secondary node (SN) terminated bearer; downlink data arrives at the SN from a user plane function (UPF); for a master node (MN) terminated SCG bearer, downlink data is transferred from the MN to the SN through an Xn interface and/or an X2 interface; a bearer with service data arriving needs to use a radio resource of the SCG.

In some embodiments of the present application, the radio resource of the SCG includes at least one of the following:
a physical layer resource; a radio link control (RLC) layer resource, a medium access control (MAC) layer resource and a physical layer resource; a Service Data Adaptation Protocol (SDAP) layer resource, a Packet Data Convergence Protocol (PDCP) layer resource, an RLC layer resource, an MAC layer resource and a physical layer resource.

In some embodiments of the present application, the inactive state refers to at least one of the following:
an SN terminated SCG bearer has no service to be sent; an MN terminated SCG bearer has no service data to be sent; an MN terminated split bearer has no service data to be sent; an SN terminated split bearer has no service data to be sent.

In some embodiments of the present application, the active state refers to at least one of the following:
an SN terminated SCG bearer has a service to be sent; an MN terminated SCG bearer has service data to be sent; an MN terminated split bearer has service data to be sent; an SN terminated split bearer has service data to be sent.

In some embodiments of the present application, the inactive state refers to at least one of the following:
none of an MN terminated split bearer, an MN terminated SCG bearer, an SN terminated MCG bearer, an SN terminated split bearer and an SN terminated SCG bearer has service data to be sent; none of the MN terminated SCG bearer, the SN terminated MCG bearer, the SN terminated split bearer, and the SN terminated SCG bearer has service data to be sent; neither the MN terminated SCG bearer nor the SN terminated SCG bearer has service data to be sent.

In some embodiments of the present application, the active state refers to at least one of the following:
an MN terminated split bearer, an MN terminated SCG bearer, an SN terminated MCG bearer, an SN terminated split bearer and an SN terminated SCG bearer all have service data to be sent; the MN terminated SCG bearer, the SN terminated MCG bearer, the SN terminated split bearer, and the SN terminated SCG bearer all have service data to be sent; both the MN terminated SCG bearer and the SN terminated SCG bearer have service data to be sent.

In some embodiments of the present application, the communication unit 410 is specifically configured to:
receive the second indication information sent by the MN through an Xn interface or an X2 interface.

In some embodiments of the present application, the second indication information includes identification information of a target primary secondary cell (PSCell) and information used for indicating an activation state of the secondary cell.

In some embodiments of the present application, the information used for indicating the activation state of the secondary cell is used for indicating that the activation state of the secondary cell is an activated state or a deactivated state, and/or the information used for indicating the activation state of the secondary cell is used for indicating an identifier of an activated BWP of the secondary cell.

In some embodiments of the present application, the second indication information includes a measurement result reported by the terminal device, and the measurement result is used by the MN or the secondary node (SN) to determine an activation state of the secondary cell (SCell) and/or a target primary secondary cell (PSCell).

In some embodiments of the present application, the communication unit 410 is further configured to:
send information used for indicating the target primary secondary cell (PSCell) to the MN.

In some embodiments of the present application, the communication unit 410 is further configured to:
receive release request information sent by the MN, where the release request information is used for requesting the source node to release a resource of the SCG.

It should be understood that the apparatus embodiments and the method embodiments may correspond to each other, and similar descriptions may refer to the method embodiments. Specifically, the network node 400 shown in FIG. 16 may correspond to the corresponding subject in executing the method 310 or the method 320 of the embodiments of the present application, and the aforementioned and other operations and/or functions of the various units in the network node 400 are respectively for the purpose of realizing the corresponding processes in each method in FIG. 10 to FIG. 15, which will not be repeated here for the sake of brevity.

FIG. 17 is a schematic block diagram of a terminal device 500 according to an embodiment of the present application. It should be understood that the terminal device may be a terminal device that interacts with the above-mentioned first node, or may be a terminal device that interacts with the MN or SN.

The terminal device interacting with the first node will be described below with reference to FIG. 17.

As shown in FIG. 17, the terminal device 500 may include:
a communication unit 510, configured to receive first indication information sent by a first node, where the first indication information is used for instructing the terminal device to deactivate a secondary cell group (SCG);
a processing unit 520, configured to deactivate the SCG based on the first indication information.

In some embodiments of the present application, a bearer of the terminal device is in at least one of the following:
a replication function of a packet data convergence protocol (PDCP) based on a dual connectivity (DC) is deactivated, and a main branch is an MN branch; for an SN terminated split bearer or an MN terminated split bearer, a branch of the SCG is deactivated and a branch of the MN is the main branch; the SN terminated split bearer is deactivated; the MN terminated split bearer is deactivated; an SN terminated SCG bearer is deactivated; an SN terminated MCG bearer remains active; an MN terminated SCG bearer is deactivated.

In some embodiments of the present application, a state of a serving cell in the SCG is in at least one of the following:
a deactivated state; an activated state or a deactivated state, and activated BWPs of all the serving cells with the activated state in the SCG are dormant BWPs; an RRC connection between the terminal device and a secondary node is in a deactivated state, and an RRC connection between the terminal device and a master node is in a connected state.

In some embodiments of the present application, the processing unit 520 is further configured to:
perform a radio resource management (RRM) measurement; the communication unit is further configured to:
send a measurement result of the RRM measurement to a master node.

In some embodiments of the present application, the communication unit 510 is further configured to:
receive an RRM measurement configuration sent by the first node.

In some embodiments of the present application, the RRM measurement configuration includes at least one of the following:
an inter-frequency measurement configuration; an intra-frequency measurement configuration; a measurement configuration for idle state; a measurement configuration for quickly establishing the SCG and a serving cell; and a measurement configuration when the SCG is deactivated.

In some embodiments of the present application, the RRM measurement configuration is carried in a system information block (SIB) and/or dedicated signaling.

In some embodiments of the present application, the first indication information is carried in at least one of the following: a physical downlink control (PDCCH), a medium access control control element (MAC CE), a signaling radio bearer SRB1 and a signaling radio bearer SRB3.

In some embodiments of the present application, the communication unit 510 is further configured to:
receive configuration information for deactivating the SCG sent by the first node.

In some embodiments of the present application, the network node 500 is a master node (MN) or a secondary node (SN).

The terminal device interacting with the MN will be described below with reference to FIG. 17.

As shown in FIG. 17, the terminal device 500 may include:
a communication unit 510, configured to receive second indication information sent by a master node (MN), where the second indication information is used for instructing to activate a secondary cell group (SCG);
a processing unit 520, configured to activate the SCG based on the second indication information.

In some embodiments of the present application, the communication unit 510 is further configured to:
send third indication information to the MN, where the third indication information is used for indicating that the SCG needs to be activated.

In some embodiments of the present application, the communication unit 510 is specifically configured to:
if a bearer on which uplink data arrives at the SN and/or a bearer at which the uplink data arrives needs to use a radio resource of the SCG, receive the third indication information sent by the terminal device.

In some embodiments of the present application, the third indication information includes a bearer identifier and/or information used for indicating that the uplink data arrives at the SN.

In some embodiments of the present application, the third indication information is carried on a radio resource control (RRC) signaling or a medium access control control element (MAC CE).

In some embodiments of the present application, the third indication information includes a measurement result reported by the terminal device, and the measurement result is used by the MN or the secondary node (SN) to determine an activation state of the secondary cell (SCell) and/or a target primary secondary cell (PSCell).

In some embodiments of the present application, the second indication information is carried on at least one of the following: a radio resource control (RRC) signaling, a physical downlink control (PDCCH), and a medium access control control element (MAC CE).

In some embodiments of the present application, the second indication information includes at least one of the following information:
a key used for calculating the SCG; a random access channel (RACH) resource for the terminal device to initiate a random access procedure to the SCG; a cell index of a serving cell where the PSCell or an RACH resource is located; information indicating an initial state of a serving cell in the SCG; and information used for indicating an initial state cell of a dormant bandwidth part (BWP) in the serving cell in the SCG.

In some embodiments of the present application, the information for indicating the activation state of the serving cell in the SCG includes at least one first bit, and the at least one first bit is respectively used for indicating an initial state of at least one serving cell in the SCG to be an activated state or a deactivated state.

In some embodiments of the present application, the information for indicating the active state cell of the dormant bandwidth part (BWP) in the serving cell in the SCG includes at least one second bit, and the at least one second bit is respectively used for indicating an initial state of a dormant BWP of at least one serving cell in the SCG to be an activated state or a deactivated state.

In some embodiments of the present application, the communication unit 510 is specifically configured to:
receive SCG configuration information sent by the MN, where the SCG configuration information includes the second indication information.

In some embodiments of the present application, the SCG configuration information is carried on a radio resource control (RRC) signaling.

In some embodiments of the present application, the RRC signaling is an RRC reconfiguration message or an RRC recovery message.

It should be understood that the apparatus embodiments and the method embodiments may correspond to each other, and similar descriptions may refer to the method embodiments. Specifically, the terminal device 500 shown in FIG. 17 may correspond to the corresponding subject in executing the method 310 or the method 320 of the embodiments of the present application, and the aforementioned and other operations and/or functions of the various units in the terminal device 500 are for the purpose of realizing the corresponding processes in each method in FIG. 10 to FIG. 15, which will not be repeated here for the sake of brevity,.

The communication device of the embodiments of the present application is described above from the perspective of functional modules with reference to the accompanying drawings. It should be understood that the functional modules can be implemented in the form of hardware, can also be implemented by instructions in the form of software, and can also be implemented by a combination of hardware and software modules.

Specifically, the steps of the method embodiments in the embodiments of the present application may be completed by hardware integrated logic circuits in the processor and/or instructions in the form of software, and the steps of the methods disclosed in conjunction with the embodiments of the present application may be directly embodied as being executed and completed by the hardware decoding processor, or executed and completed by a combination of hardware and software modules in the decoding processor.

Optionally, the software modules may be located in a random access memory, a flash memory, a read-only memory, a programmable read-only memory, an electrically erasable programmable memory, a register, and other mature storage media in the art. The storage medium is located in the memory, and the processor reads the information in the memory, and completes the steps in the above method embodiments in combination with its hardware.

For example, the communication units referred to above may be implemented by a processor and a transceiver, respectively.

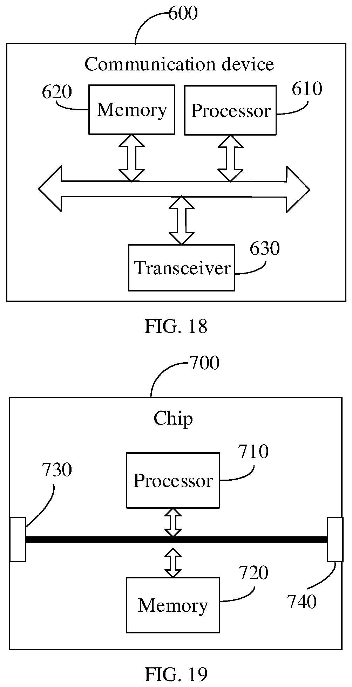

FIG. 18 is a schematic structural diagram of a communication device 600 according to an embodiment of the present application.

Referring to FIG. 18, the communication device 600 may include a processor 610.

The processor 610 may call and run a computer program from the memory to implement the methods in the embodiments of the present application.

Continuing to refer to FIG. 18, the communication device 600 may also include a memory 620.

The memory 620 may be used to store indication information, and may also be used to store codes, instructions, etc. executed by the processor 610. The processor 610 may call and run a computer program from the memory 620 to implement the methods in the embodiments of the present application. The memory 620 may be a separate device independent of the processor 610, or may be integrated in the processor 610.

Continuing to refer to FIG. 18, the communication device 600 may also include a transceiver 630.

The processor 610 can control the transceiver 630 to communicate with other devices, and specifically, can send information or data to other devices, or receive information or data sent by other devices. The transceiver 630 may include a transmitter and a receiver. The transceiver 630 may further include antennas, and the number of the antennas may be one or more.

It should be understood that individual components in the communication device 600 are connected through a bus system, where the bus system includes a power bus, a control bus and a status signal bus in addition to a data bus.

It should also be understood that the communication device 600 may be the terminal device of the embodiments of the present application, and the communication device 600 may implement the corresponding processes implemented by the terminal device in each method of the embodiments of the present application. The communication device 600 may correspond to the terminal device 500 in the embodiments of the present application, and may correspond to the corresponding subject in executing the methods 310 and 320 according to the embodiments of the present application, which is not repeated here for brevity. Similarly, the communication device 600 may be the network node in the embodiments of the present application, and the communication device 600 may implement corresponding processes implemented by the network node in each method in the embodiments of the present application. That is to say, the communication device 600 in the embodiments of the present application may correspond to the network node 400 in the embodiments of the present application, and may correspond to the corresponding subject in executing the methods 310 and 320 according to the embodiments of the present application, which is not repeated here for brevity.

In addition, the embodiment of the present application also provides a chip.

For example, the chip may be an integrated circuit chip, which has a signal processing capability, and can implement or execute the methods, steps, and logic block diagrams disclosed in the embodiments of the present application. The chip may also be referred to as a system level chip, a system chip, a chip system, a system-on-chip, or the like. Optionally, the chip can be applied to various communication devices, so that the communication device installed with the chip can execute the methods, steps and logic block diagrams disclosed in the embodiments of the present application.

FIG. 19 is a schematic structural diagram of a chip 700 according to an embodiment of the present application.

Referring to FIG. 19, the chip 700 includes a processor 710.

The processor 710 may call and run a computer program from the memory to implement the methods in the embodiments of the present application.

Continuing to refer to FIG. 19, the chip 700 may further include a memory 720.

The processor 710 may call and run a computer program from the memory 720 to implement the methods in the embodiments of the present application. The memory 720 may be used to store instruction information, and may also be used to store codes, instructions and the like executed by the processor 710. The memory 720 may be a separate device independent of the processor 710, or may be integrated in the processor 710.

Continuing to refer to FIG. 19, the chip 700 may further include an input interface 730.

The processor 710 may control the input interface 730 to communicate with other devices or chips, and specifically, may acquire information or data sent by other devices or chips.

Continuing to refer to FIG. 19, the chip 700 may further include an output interface 740.

The processor 710 may control the output interface 740 to communicate with other devices or chips, and specifically, may output information or data to other devices or chips.

It should be understood that the chip 700 can be applied to the network node in the embodiments of the present application, and the chip can implement the corresponding processes implemented by the network node in the various methods in the embodiments of the present application, and can also implement the corresponding processes implemented by the terminal device in the various methods in the embodiments of the present application, which is not repeated here for the sake of brevity.

It should also be understood that various components in the chip 700 are connected through a bus system, where the bus system includes a power bus, a control bus and a status signal bus in addition to a data bus.

The processors referred to above may include, but are not limited to:
a general-purpose processor, a Digital Signal Processor (DSP), an Application Specific Integrated Circuit (ASIC), a Field Programmable Gate Array (FPGA) or other programmable logic devices, discrete gates or transistor logic devices, discrete hardware components, and so on.

The processor may be used to implement or execute the methods, steps, and logical block diagrams disclosed in the embodiments of the present application. The steps of the methods disclosed in conjunction with the embodiments of the present application may be directly embodied as being executed and completed by a hardware decoding processor, or executed and completed by a combination of hardware and software modules in the decoding processor. The software module may be located in a random access memory, a flash memory, a read-only memory, a programmable read-only memory or an erasable programmable memory, a register and other storage media mature in the art. The storage medium is located in the memory, and the processor reads the information in the memory, and completes the steps of the above methods in combination with its hardware.

The memory mentioned above includes but is not limited to:
a volatile memory and/or a non-volatile memory. The non-volatile memory may be a Read-Only Memory (ROM), a programmable read-only memory (Programmable ROM, PROM), an erasable programmable read-only memory (Erasable PROM, EPROM), an electrically programmable read-only memory (Electrically EPROM, EEPROM) or a flash memory. The volatile memory may be a Random Access Memory (RAM), which acts as an external cache. By way of illustration and not limitation, many forms of RAM are available, such as a Static RAM (SRAM), a Dynamic RAM (DRAM), a Synchronous DRAM, SDRAM), a Double Data Rate SDRAM (DDR SDRAM), an Enhanced SDRAM (ESDRAM), a synch link DRAM (SLDRAM) and a Direct Rambus RAM (DR RAM).

It should be noted that the memories described herein are intended to include these and any other suitable types of memory.

Embodiments of the present application also provide a computer-readable storage medium for storing a computer program. The computer-readable storage medium stores one or more programs including instructions that, when executed by a portable electronic device including a plurality of application programs, enable the portable electronic device to perform the methods in the embodiments of the method 310 and/or the method 320.

Optionally, the computer-readable storage medium can be applied to the network node in the embodiments of the present application, and the computer program enables the computer to execute the corresponding processes implemented by the network node in each method of the embodiments of the present application, which is not repeated here for brevity.

Optionally, the computer-readable storage medium can be applied to the mobile terminal/terminal device in the embodiments of the present application, and the computer program enables the computer to execute the corresponding processes implemented by the mobile terminal/terminal device in each method of the embodiments of the present application, which is not repeated here for brevity.

The embodiments of the present application also provide a computer program product, including a computer program.

Optionally, the computer program product can be applied to the network node in the embodiments of the present application, and the computer program enables the computer to execute the corresponding processes implemented by the network node in the various methods of the embodiments of the present application, which is not repeated here for brevity.

Optionally, the computer program product can be applied to the mobile terminal/terminal device in the embodiments of the present application, and the computer program enables the computer to execute the corresponding processes implemented by the mobile terminal/terminal device in each method of the embodiments of the present application, which is not repeated here for brevity.

A computer program is also provided in the embodiments of the present application. When the computer program is executed by a computer, it enables the computer to execute the method of the embodiments shown in method 310 and/or method 320.

Optionally, the computer program can be applied to the network node in the embodiments of the present application. When the computer program is run on the computer, the computer executes the corresponding processes implemented by the network node in each method of the embodiments of the present application, which is not repeated here for brevity.

In addition, an embodiment of the present application further provides a communication system, which may include the above-mentioned terminal device and network node to form the communication system 100 as shown in FIG. 1, which is not repeated here for brevity. It should be noted that the term "system" and the like in the present disclosure may also be referred to as "network management architecture" or "network system" and the like.

It should also be understood that the terms used in the embodiments of the present application and the appended claims are only for the purpose of describing specific embodiments, and are not intended to limit the embodiments of the present application.

For example, as used in the embodiments of the present application and the appended claims, the singular forms "a", "said", "above", and "the" are intended to include the plural forms as well, unless the context clearly dictates other meanings otherwise.

Those skilled in the art can realize that the units and algorithm steps of each example described in conjunction with the embodiments disclosed herein can be implemented in electronic hardware, or a combination of computer software and electronic hardware. Whether these functions are performed in hardware or software depends on the specific application and design constraints of the technical solution. Experts may use different methods for each specific application to implement the described functions, but such implementation should not be considered beyond the scope of the embodiments of the present application.

The functions may be stored in a computer-readable storage medium if being implemented in the form of a software functional unit and sold or used as a stand-alone product. Based on such understanding, the essence or a part contributing to the related art of the technical solution of the embodiments of the present application or a part of the technical solution can be embodied in the form of software products, and the computer software product is stored in a storage medium, including several instructions for causing a computer device (which may be a personal computer, a server, or a network device, etc.) to execute all or part of the steps of the methods described in the embodiments of the present application. The aforementioned storage medium includes: a U disk, a removable hard disk, a read-only memory, a random access memory, a magnetic disk or an optical disk and other media that can store program codes.

Those skilled in the art can clearly understand that, for the convenience and brevity of description, the specific working process of the above-described systems, apparatuses and units may refer to the corresponding processes in the foregoing method embodiments, which will not be repeated here.

In the several embodiments provided in the present application, it should be understood that the disclosed systems, apparatuses and methods may be implemented in other manners.

For example, the division of units, modules or components in the apparatus embodiments described above is only a logical function division, and other division methods may be used in actual implementation. For example, a plurality of units, modules or components may be combined or integrated to another system, or some units or modules or components may be ignored, or not implemented.

For another example, the above-mentioned units/modules/components described as separate/display components may or may not be physically separated, that is, they may be located in one place, or may be distributed to a plurality of network units. Some or all of the units/modules/components may be selected according to actual needs to achieve the purpose of the embodiments of the present application.

Finally, it should be noted that the mutual coupling or direct coupling or communication connection shown or discussed above may be indirect coupling or communication connection through some interfaces, apparatuses or units, which may be electrical, mechanical or other forms.

The above contents are only specific implementations of the embodiments of the present application, and the protection scope of the embodiments of the present application is not limited thereto. Changes or substitutions that can be easily thought of by the person skilled in the art within the technical scope disclosed in the embodiments of the present disclosure should all be covered within the protection scope of the embodiments of the present application. Therefore, the protection scope of the embodiments of the present application should be subject to the protection scope of the claims.

## Claims

1. A wireless communication method, comprising:
sending (S311), by a first node, first indication information to a terminal device, wherein the first indication information is used for instructing to deactivate a secondary cell group, SCG,
wherein the first node is a master node, MN, and the method further comprises:
sending, by the MN, first notification information to a secondary node, SN, wherein the first notification information is used for notifying that the MN has instructed or is about to instruct the terminal device to deactivate the SCG,
receiving, by the MN, information sent by the SN for determining a state of data of the SN,
wherein the method further comprises:
acquiring, by the MN, the state of data of the SN,
wherein the state of the data of the SN comprises an active state and an inactive state,
wherein the inactive state refers to at least one of the following:
no downlink data arrives at a SN terminated bearer;
no downlink data arrives at the SN from a user plane function, UPF;
for a MN terminated SCG bearer, no downlink data is transferred from the MN to the SN through an Xn interface and/or an X2 interface;
a bearer with service data arriving does not need to use a radio resource of the SCG,
and/or,
wherein the active state refers to at least one of the following:
downlink data arrives at the SN terminated bearer;
downlink data arrives at the SN from a user plane function, UPF;
for the MN terminated SCG bearer, downlink data is transferred from the MN to the SN through an Xn interface and/or an X2 interface;
a bearer with service data arriving needs to use a radio resource of the SCG,
wherein the sending, by the MN, the first indication information to the terminal device, comprises:
in response to that the state of data of the SN is the inactive state, sending, by the MN, the first indication information to the terminal device.

2. The method according to claim 1, wherein the radio resource of the SCG comprises at least one of the following:
a physical layer resource;
a radio link control, RLC, layer resource, a medium access control, MAC, layer resource and a physical layer resource;
a Service Data Adaptation Protocol, SDAP, layer resource, a Packet Data Convergence Protocol, PDCP, layer resource, an RLC layer resource, an MAC layer resource and a physical layer resource.

3. The method according to any one of claims 1 or 2, wherein a state of a serving cell in the SCG is in at least one of the following:
a deactivated state;
an activated state or a deactivated state, and activated BWPs of all serving cells in the activated state in the SCG are dormant BWPs;
an RRC connection between the terminal device and the secondary node is in the deactivated state, and an RRC connection between the terminal device and the master node is in a connected state.

4. The method according to any one of claims 1 to 3, wherein the first indication information is carried in at least one of the following: a physical downlink control channel, PDCCH, a medium access control control element, MAC CE, a signaling radio bearer, SRB, 1 and a signaling radio bearer, SRB, 3.

5. The method according to any one of claims 1 to 4, wherein the method further comprises:
sending, by the MN, configuration information for deactivating the SCG to the terminal device.

6. A wireless communication method, comprising:
sending, by a master node, MN, second indication information to a terminal device and a secondary node, SN, respectively, wherein the second indication information is used for instructing to activate a secondary cell group, SCG,
sending, by the MN, first notification information to the SN, wherein the first notification information is used for notifying that the MN has instructed or is about to instruct the terminal device to deactivate the SCG,
receiving, by the MN, information sent by the SN for determining a state of data of the SN,
wherein the sending, by the master node, MN, the second indication information to the terminal device and the secondary node, SN, respectively, comprises:
receiving, by the MN, information sent by the secondary node, SN, for determining the state of data of the SN;
in response to that the state of the data of the SN is in an active state, sending, by the MN, the second indication information to the terminal device,
wherein the state of the data of the SN comprises an active state and an inactive state,
wherein the inactive state refers to at least one of the following:
no downlink data arrives at a SN terminated bearer;
no downlink data arrives at the SN from a user plane function, UPF;
for a MN terminated SCG bearer, no downlink data is transferred from the MN to the SN through an Xn interface and/or an X2 interface;
a bearer with service data arriving does not need to use a radio resource of the SCG,
and/or,
wherein the active state refers to at least one of the following:
downlink data arrives at a SN terminated bearer;
downlink data arrives at the SN from a user plane function, UPF;
for a MN terminated SCG bearer, downlink data is transferred from the MN to the SN through an Xn interface and/or an X2 interface;
a bearer with service data arriving needs to use a radio resource of the SCG.

7. The method according to claim 6, wherein the radio resource of the SCG comprises at least one of the following:
a physical layer resource;
a radio link control, RLC layer resource, a medium access control, MAC, layer resource and a physical layer resource;
a Service Data Adaptation Protocol, SDAP, layer resource, a Packet Data Convergence Protocol, PDCP, layer resource, an RLC layer resource, an MAC layer resource and a physical layer resource.

8. A communication device, comprising:
a processor, a memory and a transceiver, wherein the memory is configured to store a computer program, and the processor is configured to invoke and run the computer program stored in the memory to cause the communication device to perform:
sending first indication information to a terminal device, wherein the first indication information is used for instructing to deactivate a secondary cell group, SCG, wherein the communication device is a master node, MN,
sending first notification information to a secondary node, SN, wherein the first notification information is used for notifying that the MN has instructed or is about to instruct the terminal device to deactivate the SCG,
receiving information sent by the SN for determining a state of data of the SN,
acquiring the state of data of the SN,
wherein the state of the data of the SN comprises an active state and an inactive state,
wherein the inactive state refers to at least one of the following:
no downlink data arrives at a SN terminated bearer;
no downlink data arrives at the SN from a user plane function, UPF;
for a MN terminated SCG bearer, no downlink data is transferred from the MN to the SN through an Xn interface and/or an X2 interface;
a bearer with service data arriving does not need to use a radio resource of the SCG,
and/or,
wherein the active state refers to at least one of the following:
downlink data arrives at the SN terminated bearer;
downlink data arrives at the SN from a user plane function, UPF;
for the MN terminated SCG bearer, downlink data is transferred from the MN to the SN through an Xn interface and/or an X2 interface;
a bearer with service data arriving needs to use a radio resource of the SCG,
wherein the processor is further configured to invoke and run the computer program stored in the memory to cause the communication device to perform:
in response to that the state of data of the SN is the inactive state, sending the first indication information to the terminal device.

9. The communication device according to claim 8, wherein the radio resource of the SCG comprises at least one of the following:
a physical layer resource;
a radio link control, RLC, layer resource, a medium access control, MAC, layer resource and a physical layer resource;
a Service Data Adaptation Protocol, SDAP, layer resource, a Packet Data Convergence Protocol, PDCP, layer resource, an RLC layer resource, an MAC layer resource and a physical layer resource.

10. The communication device according to any one of claims 8 or 9, wherein a state of a serving cell in the SCG is in at least one of the following:
a deactivated state;
an activated state or a deactivated state, and activated BWPs of all serving cells in the activated state in the SCG are dormant BWPs;
an RRC connection between the terminal device and the secondary node is in the deactivated state, and an RRC connection between the terminal device and the master node is in a connected state.

11. The communication device according to any one of claims 8 to 10, wherein the first indication information is carried in at least one of the following: a physical downlink control channel, PDCCH, a medium access control control element, MAC CE, a signaling radio bearer, SRB, 1 and a signaling radio bearer, SRB, 3.

12. The communication device according to any one of claims 8 to 11, wherein the processor is further configured to invoke and run the computer program stored in the memory to cause the communication device to perform:
sending configuration information for deactivating the SCG to the terminal device.

13. A communication device, comprising:
a processor, a memory and a transceiver, wherein the memory is configured to store a computer program, and the processor is configured to invoke and run the computer program stored in the memory to cause the communication device to perform:
sending second indication information to a terminal device and a secondary node, SN, respectively, wherein the second indication information is used for instructing to activate a secondary cell group, SCG,
sending first notification information to the SN, wherein the first notification information is used for notifying that the MN has instructed or is about to instruct the terminal device to deactivate the SCG,
receiving information sent by the SN for determining a state of data of the SN,
wherein the processor is further configured to invoke and run the computer program stored in the memory to cause the communication device to perform:
receiving information sent by the secondary node, SN, for determining the state of data of the SN;
in response to that the state of the data of the SN is in an active state, sending the second indication information to the terminal device,
wherein the state of the data of the SN comprises an active state and an inactive state,
wherein the inactive state refers to at least one of the following:
no downlink data arrives at a SN terminated bearer;
no downlink data arrives at the SN from a user plane function, UPF;
for a MN terminated SCG bearer, no downlink data is transferred from the MN to the SN through an Xn interface and/or an X2 interface;
a bearer with service data arriving does not need to use a radio resource of the SCG,
and/or,
wherein the active state refers to at least one of the following:
downlink data arrives at a SN terminated bearer;
downlink data arrives at the SN from a user plane function, UPF;
for a MN terminated SCG bearer, downlink data is transferred from the MN to the SN through an Xn interface and/or an X2 interface;
a bearer with service data arriving needs to use a radio resource of the SCG.

14. The communication device according to claim 13, wherein the radio resource of the SCG comprises at least one of the following:
a physical layer resource;
a radio link control, RLC layer resource, a medium access control, MAC, layer resource and a physical layer resource;
a Service Data Adaptation Protocol, SDAP, layer resource, a Packet Data Convergence Protocol, PDCP, layer resource, an RLC layer resource, an MAC layer resource and a physical layer resource.

## Patentansprüche

1. Drahtloses Kommunikationsverfahren, umfassend:
Senden (S311), durch einen ersten Knoten, erster Anzeigeinformationen an eine Endgerätvorrichtung, wobei die ersten Anzeigeinformationen dazu dienen, die Deaktivierung einer Sekundärzellengruppe, SCG (Secondary Cell Group), anzuweisen,
wobei der erste Knoten ein Masterknoten, MN (Master Node), ist und das Verfahren ferner umfasst:
Senden, durch den MN, erster Benachrichtigungsinformationen an einen Sekundärknoten, SN (Secondary Node), wobei die ersten Benachrichtigungsinformationen dazu dienen, mitzuteilen, dass der MN die Endgerätvorrichtung angewiesen hat oder im Begriff ist, sie anzuweisen, die SCG zu deaktivieren,
Empfangen, durch den MN, von Informationen, die vom SN gesendet wurden, um einen Datenzustand des SN zu bestimmen,
wobei das Verfahren ferner umfasst:
Erfassen, durch den MN, des Datenzustands des SN,
wobei der Datenzustand des SN einen aktiven Zustand und einen inaktiven Zustand umfasst,
wobei der inaktive Zustand wenigstens eines der folgenden umfasst:
auf einem am SN terminierten Träger kommen keine Abwärtsstreckendaten an;
am SN kommen keine Abwärtsstreckendaten von einer Benutzerebenenfunktion (UPF, User Plane Function) an;
für einen am MN terminierten SCG-Träger werden keine Abwärtsstreckendaten vom MN an den SN über eine Xn-Schnittstelle und/oder eine X2-Schnittstelle übertragen;
ein Träger mit ankommenden Dienstdaten braucht keine Funkressource der SCG zu nutzen,
und/oder
wobei der aktive Zustand wenigstens eines der folgenden umfasst:
auf dem am SN terminierten Träger kommen Abwärtsstreckendaten an;
am SN kommen Abwärtsstreckendaten von einer Benutzerebenenfunktion (UPF, User Plane Function) an;
für den am MN terminierten SCG-Träger werden Abwärtsstreckendaten vom MN zum SN über eine Xn-Schnittstelle und/oder eine X2-Schnittstelle übertragen;
ein Träger mit ankommenden Dienstdaten muss eine Funkressource der SCG nutzen,
wobei das Senden, durch den MN, der ersten Anzeigeinformationen an die Endgerätvorrichtung umfasst:
in Reaktion darauf, dass der Datenzustand des SN der inaktive Zustand ist, Senden, durch den MN, der ersten Anzeigeinformationen an die Endgerätvorrichtung.

2. Verfahren gemäß Anspruch 1, wobei die Funkressource der SCG wenigstens eines der folgenden umfasst:
eine Ressource der physikalischen Schicht;
eine Ressource der Funkverbindungssteuerungs, RLC (Radio Link Control), -Schicht, eine Ressource der Medienzugriffssteuerungs, MAC (Medium Access Control), -Schicht und eine Ressource der physikalischen Schicht;
eine Ressource der Dienstdatenanpassungsprotokoll, SDAP (Service Data Adaptation Protocol) -Schicht, eine Ressource der Paketdatenkonvergenzprotokoll, PDCP (Packet Data Convergence Protocol) -Schicht, eine Ressource der RLC-Schicht, eine Ressource der MAC-Schicht und eine Ressource der physikalischen Schicht.

3. Verfahren gemäß einem der Ansprüche 1 oder 2, wobei ein Zustand einer bedienenden Zelle in der SCG mindestens eines der folgenden ist:
ein deaktivierter Zustand;
ein aktivierter Zustand oder ein deaktivierter Zustand, und aktivierte BWPs aller bedienenden Zellen im aktivierten Zustand im SCG sind ruhende BWPs;
eine RRC-Verbindung zwischen der Endgerätvorrichtung und dem Sekundärknoten befindet sich im deaktivierten Zustand und eine RRC-Verbindung zwischen der Endgerätvorrichtung und dem Masterknoten befindet sich in einem verbundenen Zustand.

4. Verfahren gemäß einem der Ansprüche 1 bis 3, wobei die ersten Anzeigeinformationen in wenigstens einem der folgenden transportiert werden: einem gemeinsamen physischen Abwärtsstrecken-Steuerkanal, PDCCH (Physical Downlink Control Channel), einem Medienzugriffskontroll-Steuerelement, MAC CE (Medium Access Control, Control Element), einem Signalisierungsfunkträger, SRB (Signaling Radio Bearer), 1 und einem Signalisierungsfunkträger, SRB, 3.

5. Verfahren gemäß einem der Ansprüche 1 bis 4, wobei das Verfahren ferner umfasst:
Senden, durch den MN, der Konfigurationsinformationen zum Deaktivieren der SCG an die Endgerätvorrichtung.

6. Drahtloses Kommunikationsverfahren, umfassend:
Senden, durch einen Masterknoten, MN, zweiter Anzeigeinformationen an eine Endgerätvorrichtung bzw. einen Sekundärknoten, SN, wobei die zweiten Anzeigeinformationen dazu dienen, die Aktivierung einer Sekundärzellengruppe, SCG (Secondary Cell Group), anzuweisen,
Senden, durch den MN, erster Benachrichtigungsinformationen an den SN, wobei die ersten Benachrichtigungsinformationen dazu dienen, mitzuteilen, dass der MN die Endgerätvorrichtung angewiesen hat oder im Begriff ist, sie anzuweisen, die SCG zu deaktivieren,
Empfangen, durch den MN, von Informationen, die vom SN gesendet wurden, um einen Datenzustand des SN zu bestimmen,
wobei das Senden, durch den Masterknoten, MN, der zweiten Anzeigeinformationen an die Endgerätvorrichtung bzw. den Sekundärknoten, SN, umfasst:
Empfangen, durch den MN, von Informationen, die vom Sekundärknoten, SN, gesendet wurden, um den Datenzustand des SN zu bestimmen;
in Reaktion darauf, dass der Datenzustand des SN ein aktiver Zustand ist, Senden, durch den MN, der zweiten Anzeigeinformationen an die Endgerätvorrichtung,
wobei der Datenzustand des SN einen aktiven Zustand und einen inaktiven Zustand umfasst,
wobei der inaktive Zustand wenigstens eines der folgenden umfasst:
auf einem am SN terminierten Träger kommen keine Abwärtsstreckendaten an;
am SN kommen keine Abwärtsstreckendaten von einer Benutzerebenenfunktion (UPF, User Plane Function) an;
für einen am MN terminierten SCG-Träger werden keine Abwärtsstreckendaten vom MN zum SN über eine Xn-Schnittstelle und/oder eine X2-Schnittstelle übertragen;
ein Träger mit ankommenden Dienstdaten braucht keine Funkressource der SCG zu nutzen,
und/oder
wobei der aktive Zustand wenigstens eines der folgenden umfasst:
auf einem am SN terminierten Träger kommen Abwärtsstreckendaten an;
am SN kommen Abwärtsstreckendaten von einer Benutzerebenenfunktion (UPF, User Plane Function) an;
für einen am MN terminierten SCG-Träger werden Abwärtsstreckendaten vom MN zum SN über eine Xn-Schnittstelle und/oder eine X2-Schnittstelle übertragen;
ein Träger mit ankommenden Dienstdaten muss eine Funkressource der SCG nutzen.

7. Verfahren gemäß Anspruch 6, wobei die Funkressource der SCG wenigstens eines der folgenden umfasst:
eine Ressource der physikalischen Schicht;
eine Ressource der Funkverbindungssteuerungs, RLC (Radio Link Control), -Schicht, eine Ressource der Medienzugriffssteuerungs, MAC (Medium Access Control), -Schicht und eine Ressource der physikalischen Schicht;
eine Ressource der Dienstdatenanpassungsprotokoll, SDAP (Service Data Adaptation Protocol) -Schicht, eine Ressource der Paketdatenkonvergenzprotokoll, PDCP (Packet Data Convergence Protocol) -Schicht, eine Ressource der RLC-Schicht, eine Ressource der MAC-Schicht und eine Ressource der physikalischen Schicht.

8. Kommunikationsvorrichtung, umfassend:
einen Prozessor, einen Speicher und einen Sendeempfänger, wobei der Speicher dafür ausgelegt ist, ein Computerprogramm zu speichern, und der Prozessor dafür ausgelegt ist, das im Speicher gespeicherte Computerprogramm aufzurufen und auszuführen, um die Kommunikationsvorrichtung zu veranlassen, Folgendes durchzuführen:
Senden erster Anzeigeinformationen an eine Endgerätvorrichtung, wobei die ersten Anzeigeinformationen dazu dienen, die Deaktivierung einer Sekundärzellengruppe, SCG (Secondary Cell Group), anzuweisen, wobei die Kommunikationsvorrichtung ein Masterknoten, MN, ist,
Senden erster Benachrichtigungsinformationen an einen Sekundärknoten, SN (Secondary Node), wobei die ersten Benachrichtigungsinformationen dazu dienen, mitzuteilen, dass der MN die Endgerätvorrichtung angewiesen hat oder im Begriff ist, sie anzuweisen, die SCG zu deaktivieren,
Empfangen von Informationen, die vom SN gesendet wurden, um einen Datenzustand des SN zu bestimmen,
Erfassen des Datenzustands des SN,
wobei der Datenzustand des SN einen aktiven Zustand und einen inaktiven Zustand umfasst,
wobei der inaktive Zustand wenigstens eines der folgenden umfasst:
auf einem am SN terminierten Träger kommen keine Abwärtsstreckendaten an;
am SN kommen keine Abwärtsstreckendaten von einer Benutzerebenenfunktion (UPF, User Plane Function) an;
für einen am MN terminierten SCG-Träger werden keine Abwärtsstreckendaten vom MN an den SN über eine Xn-Schnittstelle und/oder eine X2-Schnittstelle übertragen;
ein Träger mit ankommenden Dienstdaten braucht keine Funkressource der SCG zu nutzen,
und/oder
wobei der aktive Zustand wenigstens eines der folgenden umfasst:
auf dem am SN terminierten Träger kommen Abwärtsstreckendaten an;
am SN kommen Abwärtsstreckendaten von einer Benutzerebenenfunktion (UPF, User Plane Function) an;
für den am MN terminierten SCG-Träger werden Abwärtsstreckendaten vom MN zum SN über eine Xn-Schnittstelle und/oder eine X2-Schnittstelle übertragen;
ein Träger mit ankommenden Dienstdaten muss eine Funkressource der SCG nutzen,
wobei der Prozessor ferner dafür ausgelegt ist, das im Speicher gespeicherte Computerprogramm aufzurufen und auszuführen, um die Kommunikationsvorrichtung zu veranlassen, Folgendes durchzuführen:
in Reaktion darauf, dass der Datenzustand des SN der inaktive Zustand ist, Senden der ersten Anzeigeinformationen an die Endgerätvorrichtung.

9. Kommunikationsvorrichtung gemäß Anspruch 8, wobei die Funkressource der SCG wenigstens eines der folgenden umfasst:
eine Ressource der physikalischen Schicht;
eine Ressource der Funkverbindungssteuerungs, RLC (Radio Link Control), -Schicht, eine Ressource der Medienzugriffssteuerungs, MAC (Medium Access Control), -Schicht und eine Ressource der physikalischen Schicht;
eine Ressource der Dienstdatenanpassungsprotokoll, SDAP (Service Data Adaptation Protocol) -Schicht, eine Ressource der Paketdatenkonvergenzprotokoll, PDCP (Packet Data Convergence Protocol) -Schicht, eine Ressource der RLC-Schicht, eine Ressource der MAC-Schicht und eine Ressource der physikalischen Schicht.

10. Kommunikationsvorrichtung gemäß einem der Ansprüche 8 oder 9, wobei ein Zustand einer bedienenden Zelle in der SCG mindestens eines der folgenden ist:
ein deaktivierter Zustand;
ein aktivierter Zustand oder ein deaktivierter Zustand, und aktivierte BWPs aller bedienenden Zellen im aktivierten Zustand im SCG sind ruhende BWPs;
eine RRC-Verbindung zwischen der Endgerätvorrichtung und dem Sekundärknoten befindet sich im deaktivierten Zustand und eine RRC-Verbindung zwischen der Endgerätvorrichtung und dem Masterknoten befindet sich in einem verbundenen Zustand.

11. Kommunikationsvorrichtung gemäß einem der Ansprüche 8 bis 10, wobei die ersten Anzeigeinformationen in wenigstens einem der folgenden transportiert werden: einem gemeinsamen physischen Abwärtsstrecken-Steuerkanal, PDCCH (Physical Downlink Control Channel), einem Medienzugriffskontroll-Steuerelement, MAC CE (Medium Access Control, Control Element), einem Signalisierungsfunkträger, SRB (Signaling Radio Bearer), 1 und einem Signalisierungsfunkträger, SRB, 3.

12. Kommunikationsvorrichtung gemäß einem der Ansprüche 8 bis 11, wobei der Prozessor ferner dafür ausgelegt ist, das im Speicher gespeicherte Computerprogramm aufzurufen und auszuführen, um die Kommunikationsvorrichtung zu veranlassen, Folgendes durchzuführen:
Senden der Konfigurationsinformationen zum Deaktivieren der SCG an die Endgerätvorrichtung.

13. Kommunikationsvorrichtung, umfassend:
einen Prozessor, einen Speicher und einen Sendeempfänger, wobei der Speicher dafür ausgelegt ist, ein Computerprogramm zu speichern, und der Prozessor dafür ausgelegt ist, das im Speicher gespeicherte Computerprogramm aufzurufen und auszuführen, um die Kommunikationsvorrichtung zu veranlassen, Folgendes durchzuführen:
Senden zweiter Anzeigeinformationen an eine Endgerätvorrichtung bzw. einen Sekundärknoten, SN, wobei die zweiten Anzeigeinformationen dazu dienen, die Aktivierung einer Sekundärzellengruppe, SCG (Secondary Cell Group), anzuweisen,
Senden erster Benachrichtigungsinformationen an den SN, wobei die ersten Benachrichtigungsinformationen dazu dienen, mitzuteilen, dass der MN die Endgerätvorrichtung angewiesen hat oder im Begriff ist, sie anzuweisen, die SCG zu deaktivieren,
Empfangen von Informationen, die vom SN gesendet wurden, um einen Datenzustand des SN zu bestimmen,
wobei der Prozessor ferner dafür ausgelegt ist, das im Speicher gespeicherte Computerprogramm aufzurufen und auszuführen, um die Kommunikationsvorrichtung zu veranlassen, Folgendes durchzuführen:
Empfangen von Informationen, die vom Sekundärknoten, SN, gesendet wurden, um einen Datenzustand des SN zu bestimmen,
in Reaktion darauf, dass der Datenzustand des SN in einem aktiven Zustand ist, Senden der zweiten Anzeigeinformationen an die Endgerätvorrichtung,
wobei der Datenzustand des SN einen aktiven Zustand und einen inaktiven Zustand umfasst,
wobei der inaktive Zustand wenigstens eines der folgenden umfasst:
auf einem am SN terminierten Träger kommen keine Abwärtsstreckendaten an;
am SN kommen keine Abwärtsstreckendaten von einer Benutzerebenenfunktion (UPF, User Plane Function) an;
für einen am MN terminierten SCG-Träger werden keine Abwärtsstreckendaten vom MN an den SN über eine Xn-Schnittstelle und/oder eine X2-Schnittstelle übertragen;
ein Träger mit ankommenden Dienstdaten braucht keine Funkressource der SCG zu nutzen,
und/oder
wobei der aktive Zustand wenigstens eines der folgenden umfasst:
auf einem am SN terminierten Träger kommen Abwärtsstreckendaten an;
am SN kommen Abwärtsstreckendaten von einer Benutzerebenenfunktion (UPF, User Plane Function) an;
für einen am MN terminierten SCG-Träger werden Abwärtsstreckendaten vom MN zum SN über eine Xn-Schnittstelle und/oder eine X2-Schnittstelle übertragen;
ein Träger mit ankommenden Dienstdaten muss eine Funkressource der SCG nutzen.

14. Kommunikationsvorrichtung gemäß Anspruch 13, wobei die Funkressource der SCG wenigstens eines der folgenden umfasst:
eine Ressource der physikalischen Schicht;
eine Ressource der Funkverbindungssteuerungs, RLC (Radio Link Control), -Schicht, eine Ressource der Medienzugriffssteuerungs, MAC (Medium Access Control), -Schicht und eine Ressource der physikalischen Schicht;
eine Ressource der Dienstdatenanpassungsprotokoll, SDAP (Service Data Adaptation Protocol) -Schicht, eine Ressource der Paketdatenkonvergenzprotokoll, PDCP (Packet Data Convergence Protocol) -Schicht, eine Ressource der RLC-Schicht, eine Ressource der MAC-Schicht und eine Ressource der physikalischen Schicht.

## Revendications

1. Procédé de communication sans fil, comprenant les étapes suivantes :
envoyer (S311), par un premier nœud, des premières informations d'indication à un dispositif terminal, où les premières informations d'indication sont utilisées pour donner pour instruction de désactiver un groupe de cellules secondaires, SCG, le premier nœud étant un nœud maître, MN, et le procédé comprenant en outre :
l'envoi, par le MN, de premières informations de notification à un nœud secondaire, SN, où les premières informations de notification sont utilisées pour notifier que le MN a donné pour instruction ou est sur le point de donner pour instruction au dispositif terminal de désactiver le SCG,
la réception, par le MN, d'informations envoyées par le SN pour déterminer un état des données du SN,
où le procédé comprend en outre :
l'acquisition, par le MN, de l'état des données du SN, où l'état des données du SN comprend un état actif et un état inactif, où l'état inactif se réfère à au moins l'un des états suivants :
aucune donnée de liaison descendante n'arrive à un support terminé par un SN ;
aucune donnée de liaison descendante n'arrive au SN depuis une fonction de plan utilisateur, UPF ;
pour un support SCG terminé par un MN, aucune donnée de liaison descendante n'est transférée du MN au SN par une interface Xn et/ou une interface X2 ;
un support avec des données de service arrivant n'a pas besoin d'utiliser une ressource radio du SCG,
et/ou,
où l'état actif fait référence à au moins l'un des états suivants :
les données de liaison descendante arrivent au support terminé par un SN ;
les données de liaison descendante arrivent au SN à partir d'une fonction de plan utilisateur, UPF ;
pour le support SCG terminé par un MN, les données de liaison descendante sont transférées du MN au SN par une interface Xn et/ou une interface X2 ;
un support avec des données de service arrivant doit utiliser une ressource radio du SCG,
où l'envoi, par le MN, des premières informations d'indication au terminal, comprend :
en réponse au fait que l'état des données du SN est l'état inactif, l'envoi, par le MN, des premières informations d'indication au dispositif terminal.

2. Procédé selon la revendication 1, dans lequel la ressource radio du SCG comprend au moins l'une des ressources suivantes :
une ressource de couche physique ;
une ressource de couche de contrôle de liaison radio, RLC, une ressource de couche de contrôle d'accès au support, MAC, et une ressource de couche physique ;
une ressource de couche de protocole d'adaptation de données de service, SDAP, une ressource de couche de protocole de convergence de données par paquets, PDCP, une ressource de couche RLC, une ressource de couche MAC et une ressource de couche physique.

3. Procédé selon l'une quelconque des revendications 1 ou 2, dans lequel un état d'une cellule de desserte dans le SCG est au moins l'un des états suivants :
un état désactivé ;
un état activé ou un état désactivé, et les BWP activées de toutes les cellules de desserte dans l'état activé dans le SCG sont des BWP dormantes ;
une connexion RRC entre le dispositif terminal et le nœud secondaire est dans l'état désactivé, et une connexion RRC entre le dispositif terminal et le nœud maître est dans un état connecté.

4. Procédé selon l'une quelconque des revendications 1 à 3, dans lequel les premières informations d'indication sont transportées dans au moins l'un des suivants : un canal de commande de liaison descendante physique, PDCCH, un élément de commande de contrôle d'accès au support, MAC CE, une porteuse radio de signalisation, SRB, 1 et une porteuse radio de signalisation, SRB, 3.

5. Procédé selon l'une quelconque des revendications 1 à 4, dans lequel le procédé comprend en outre :
l'envoi au dispositif terminal, par le MN, d'informations de configuration pour désactiver le SCG.

6. Procédé de communication sans fil, comprenant les étapes suivantes :
envoyer, par un nœud maître, MN, des deuxièmes informations d'indication à un dispositif terminal et à un nœud secondaire, SN, respectivement, où les deuxièmes informations d'indication sont utilisées pour donner pour instruction d'activer un groupe de cellules secondaires, SCG,
envoyer, par le MN, des premières informations de notification au SN, où les premières informations de notification sont utilisées pour notifier que le MN a donné pour instruction ou est sur le point de donner pour instruction au dispositif terminal de désactiver le SCG, recevoir, par le MN, des informations envoyées par le SN pour déterminer un état des données du SN,
où l'envoi, par le nœud maître, MN, des deuxièmes informations d'indication au dispositif terminal et au nœud secondaire, SN, respectivement, comprend les étapes suivantes :
recevoir, par le MN, les informations envoyées par le nœud secondaire, SN, pour déterminer l'état des données du SN ;
en réponse au fait que l'état des données du SN est un état actif, envoyer, par le MN, les deuxièmes informations d'indication au dispositif terminal,
où l'état des données du SN comprend un état actif et un état inactif,
où l'état inactif se réfère à au moins l'un des états suivants :
aucune donnée de liaison descendante n'arrive à un support terminé par un SN ;
aucune donnée de liaison descendante n'arrive au SN depuis une fonction de plan utilisateur, UPF ;
pour un support SCG terminé par un MN, aucune donnée de liaison descendante n'est transférée du MN au SN par une interface Xn et/ou une interface X2 ;
un support avec des données de service arrivant n'a pas besoin d'utiliser une ressource radio du SCG,
et/ou,
où l'état actif fait référence à au moins l'un des états suivants :
les données de liaison descendante arrivent à un support terminé par un SN ;
les données de liaison descendante arrivent au SN à partir d'une fonction de plan utilisateur, UPF ;
pour un support SCG terminé par un MN, les données de liaison descendante sont transférées du MN au SN via une interface Xn et/ou une interface X2 ;
un support avec des données de service arrivant doit utiliser une ressource radio du SCG.

7. Procédé selon la revendication 6, dans lequel la ressource radio du SCG comprend au moins l'une des ressources suivantes :
une ressource de couche physique ;
une ressource de couche de contrôle de liaison radio, RLC, une ressource de couche de contrôle d'accès au support, MAC, et une ressource de couche physique ;
une ressource de couche de protocole d'adaptation de données de service, SDAP, une ressource de couche de protocole de convergence de données par paquets, PDCP, une ressource de couche RLC, une ressource de couche MAC et une ressource de couche physique.

8. Dispositif de communication, comprenant :
un processeur, une mémoire et un émetteur-récepteur, où la mémoire est configurée pour stocker un programme informatique, et le processeur est configuré pour appeler et exécuter le programme informatique stocké dans la mémoire afin d'amener le dispositif de communication à exécuter les étapes suivantes :
envoyer des premières informations d'indication à un dispositif terminal, les premières informations d'indication étant utilisées pour donner pour instruction de désactiver un groupe de cellules secondaires, SCG, le dispositif de communication étant un nœud maître, MN,
envoyer des premières informations de notification à un nœud secondaire, SN, les premières informations de notification étant utilisées pour notifier que le MN a donné pour instruction ou est sur le point de donner pour instruction au dispositif terminal de désactiver le SCG, recevoir les informations envoyées par le SN pour déterminer un état des données du SN,
acquérir l'état des données du SN,
où l'état des données du SN comprend un état actif et un état inactif, où l'état inactif se réfère à au moins l'un des états suivants :
aucune donnée de liaison descendante n'arrive à un support terminé par un SN ;
aucune donnée de liaison descendante n'arrive au SN depuis une fonction de plan utilisateur, UPF ;
pour un support SCG terminé par un MN, aucune donnée de liaison descendante n'est transférée du MN au SN par une interface Xn et/ou une interface X2 ;
un support avec des données de service arrivant n'a pas besoin d'utiliser une ressource radio du SCG,
et/ou,
où l'état actif fait référence à au moins l'un des états suivants :
les données de liaison descendante arrivent au support terminé par un SN ;
les données de liaison descendante arrivent au SN à partir d'une fonction de plan utilisateur, UPF ;
pour le support SCG terminé par un MN, les données de liaison descendante sont transférées du MN au SN par une interface Xn et/ou une interface X2 ;
un support avec des données de service arrivant doit utiliser une ressource radio du SCG,
où le processeur est en outre configuré pour appeler et exécuter le programme informatique stocké dans la mémoire afin d'amener le dispositif de communication à exécuter l'étape suivante :
en réponse au fait que l'état des données du SN est l'état inactif, envoyer les premières informations d'indication au dispositif terminal.

9. Dispositif de communication selon la revendication 8, dans lequel la ressource radio du SCG comprend au moins l'une des ressources suivantes :
une ressource de couche physique ;
une ressource de couche de contrôle de liaison radio, RLC, une ressource de couche de contrôle d'accès au support, MAC, et une ressource de couche physique ;
une ressource de couche de protocole d'adaptation de données de service, SDAP, une ressource de couche de protocole de convergence de données par paquets, PDCP, une ressource de couche RLC, une ressource de couche MAC et une ressource de couche physique.

10. Dispositif de communication selon l'une quelconque des revendications 8 ou 9, dans lequel un état d'une cellule de desserte dans le SCG est au moins l'un des états suivants :
un état désactivé ;
un état activé ou un état désactivé, et les BWP activées de toutes les cellules de desserte dans l'état activé dans le SCG sont des BWP dormantes ;
une connexion RRC entre le dispositif terminal et le nœud secondaire est dans l'état désactivé, et une connexion RRC entre le dispositif terminal et le nœud maître est dans un état connecté.

11. Dispositif de communication selon l'une quelconque des revendications 8 à 10, dans lequel les premières informations d'indication sont transportées dans au moins l'un des suivants : un canal de commande de liaison descendante physique, PDCCH, un élément de commande de contrôle d'accès au support, MAC CE, une porteuse radio de signalisation, SRB, 1 et une porteuse radio de signalisation, SRB, 3.

12. Dispositif de communication selon l'une quelconque des revendications 8 à 11, dans lequel le processeur est en outre configuré pour invoquer et exécuter le programme informatique stocké dans la mémoire afin d'amener le dispositif de communication à :
envoyer au dispositif terminal des informations de configuration pour désactiver le SCG.

13. Dispositif de communication, comprenant :
un processeur, une mémoire et un émetteur-récepteur, où la mémoire est configurée pour stocker un programme informatique, et le processeur est configuré pour invoquer et exécuter le programme informatique stocké dans la mémoire afin d'amener le dispositif de communication à :
envoyer des deuxièmes informations d'indication à un dispositif terminal et à un nœud secondaire, SN, respectivement, où les deuxièmes informations d'indication sont utilisées pour donner pour instruction d'activer un groupe de cellules secondaire, SCG,
envoyer des premières informations de notification au SN, les premières informations de notification étant utilisées pour notifier que le MN a donné pour instruction ou est sur le point de donner pour instruction au dispositif terminal de désactiver le SCG, recevoir des informations envoyées par le SN pour déterminer un état des données du SN,
le processeur étant en outre configuré pour invoquer et exécuter le programme informatique stocké dans la mémoire afin d'amener le dispositif de communication à :
recevoir des informations envoyées par le nœud secondaire, SN, pour déterminer l'état des données du SN ;
en réponse au fait que l'état des données du SN est un état actif, envoyer les deuxièmes informations d'indication au dispositif terminal,
où lequel l'état des données du SN comprend un état actif et un état inactif,
où l'état inactif se réfère à au moins l'un des éléments suivants :
aucune donnée de liaison descendante n'arrive à un support terminé par un SN ;
aucune donnée de liaison descendante n'arrive au SN depuis une fonction de plan utilisateur, UPF ;
pour un support SCG terminé par un MN, aucune donnée de liaison descendante n'est transférée du MN au SN par une interface Xn et/ou une interface X2 ;
un support avec des données de service arrivant n'a pas besoin d'utiliser une ressource radio du SCG,
et/ou,
où l'état actif fait référence à au moins l'un des états suivants :
les données de liaison descendante arrivent à un support terminé par un SN ;
les données de liaison descendante arrivent au SN à partir d'une fonction de plan utilisateur, UPF ;
pour un support SCG terminé par un MN, les données de liaison descendante sont transférées du MN au SN via une interface Xn et/ou une interface X2 ;
un support avec des données de service arrivant doit utiliser une ressource radio du **SCG.**

14. Dispositif de communication selon la revendication 13, dans lequel la ressource radio du SCG comprend au moins l'une des ressources suivantes :
une ressource de couche physique ;
une ressource de couche de contrôle de liaison radio, RLC, une ressource de couche de contrôle d'accès au support, MAC, et une ressource de couche physique ;
une ressource de couche de protocole d'adaptation de données de service, SDAP, une ressource de couche de protocole de convergence de données par paquets, PDCP, une ressource de couche RLC, une ressource de couche MAC et une ressource de couche physique.
